(19) Europäisches Patentamt
European Patent Office
Office européen des brevets

(11) EP 0 942 386 B1

(12) **FASCICULE DE BREVET EUROPEEN**

(45) Date de publication et mention de la délivrance du brevet:
**17.05.2006 Bulletin 2006/20**

(51) Int Cl.:
***G06K 7/08*** *(2006.01)* ***G06K 7/10*** *(2006.01)*
***G06K 7/00*** *(2006.01)*

(21) Numéro de dépôt: **99400566.8**

(22) Date de dépôt: **09.03.1999**

(54) **Procédé et systeme de lecture multiple d'un ensemble d'étiquettes portant des codes d'identification distincts**

Verfahren und System zum mehrmaligen Lesen einer Sammlung von Etiketten mit verschiedenen Identifikationskodes

Method and system for multiple reading of a group of labels having different identification codes

(84) Etats contractants désignés:
**DE ES GB IT**

(30) Priorité: **12.03.1998 FR 9803058**

(43) Date de publication de la demande:
**15.09.1999 Bulletin 1999/37**

(73) Titulaire: **COMMISSARIAT A L'ENERGIE ATOMIQUE**
**75015 Paris (FR)**

(72) Inventeurs:
- **Vacherand, François**
**38800 Le Pont de Claix (FR)**
- **Crochon, Elisabeth**
**38320 Poisat (FR)**

(74) Mandataire: **Audier, Philippe André et al**
**Brevalex**
**3, rue du Docteur Lancereaux**
**75008 Paris (FR)**

(56) Documents cités:
**EP-A- 0 696 011**
**FR-A- 2 677 135**
**US-A- 5 339 073**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 942 386 B1

Printed by Jouve, 75001 PARIS (FR)

## Description

### Domaine de l'invention

L'invention concerne un procédé de lecture multiple d'un ensemble statique ou dynamique d'étiquettes munies chacune d'un code d'identification et situées dans le champ électromagnétique émis par un dispositif interrogateur. L'invention concerne également un système pour mettre en oeuvre ce procédé.

L'invention s'applique d'une manière générale à toute transaction entre un système interrogateur et des systèmes répondeurs (étiquettes) dont on ne connaît, a priori, pas le nombre. En particulier, l'invention trouve des applications dans le domaine de la reconnaissance d'individus porteurs de badge, ou dans les domaines de la comptabilisation et du contrôle d'objets porteurs d'étiquettes, tels que des bagages dans un aéroport, des marchandises dans un magasin, ou encore des produits dans une chaîne de production.

### Etat de la technique

De nombreux systèmes et procédés d'identification d'objets porteurs d'étiquettes sont connus actuellement de l'homme du métier. La plupart d'entre eux s'appliquent à une lecture multi-étiquette, appelée aussi "lecture multiple".

Les procédés de lecture multiple d'étiquettes, actuellement connus, peuvent être regroupés selon trois domaines de tri principaux : un tri relatif à l'espace, un tri en fonction de la fréquence et un tri en fonction du temps.

Les méthodes basées sur un tri relatif à l'espace ont pour but de séparer les étiquettes par modification du volume traité par le dispositif interrogateur. Ceci est réalisé en modifiant le champ rayonné du dispositif interrogateur, en utilisant différentes puissances d'émission et/ou plusieurs émetteurs.

Le second domaine de tri est celui de la séparation des étiquettes en fonction de la fréquence. Dans ce cas, chaque étiquette émet, à une fréquence donnée qui dépend soit de son code, soit d'une bande non occupée par les autres, soit encore de tout autre critère prédéfini.

Le troisième domaine de tri, à savoir le tri en fonction du temps, est celui qui est le plus fréquemment utilisé dans les procédés connus. Il consiste à répartir les échanges entre le dispositif interrogateur et les étiquettes dans le temps et nécessite ainsi un protocole particulier. C'est ce type de procédé qui demande le moins de moyens matériels pour être mis en oeuvre. Parmi ce type de procédé de lecture, on peut distinguer ceux grandes approches :

- les procédés dits "synchrones", où l'interrogateur est maître ; et
- les procédés asynchrones, où les étiquettes émettent dès leur rentrée dans le champ électromagnétique du dispositif interrogateur.

Certains des procédés connus proposent une réémission du code de l'étiquette, après un temps aléatoire propre à chaque étiquette, lorsqu'il y a détection de collision de messages émis simultanément par les étiquettes.

Il existe aussi des procédés qui consistent à laisser une tranche de temps particulière pour la réponse à l'étiquette. Chaque tranche ce temps est déterminée de manière univoque par le code d'identification de chaque étiquette. Cependant, ces procédés n'optimisent pas le temps de transaction entre le dispositif interrogateur et l'ensemble des étiquettes. De plus, le temps mis par le procédé pour lire la totalité des étiquettes peut être basé sur le tirage de nombre aléatoire, en supplément de l'aléa du nombre d'étiquettes présentes, ce qui implique qu'il peut ne pas être déterministe.

Parmi les procédés à domaine de tri temporel, on trouve le procédé décrit dans la demande de brevet français FR-A-2 677 135. Cette demande de brevet décrit une approche temporelle synchrone sur arbre binaire.

De façon plus précise, cette demande de brevet décrit comment les étiquettes présentes dans le champ d'interrogation d'un dispositif interrogateur sont amenées, par ce dispositif, à fournir successivement chaque bit de leur code d'identification, jusqu'à ce que ce code soit entièrement identifié. Pour cela, les étiquettes répondent à un signal de commande du dispositif interrogateur ; lorsque l'étiquette détecte que le code en cours d'identification est différent du sien, alors elle s'inhibe momentanément, c'est-à-dire qu'elle devient muette, de sorte que le cycle d'identification continu avec les autres étiquettes jusau'à ce qu'il ne reste plus qu'une seule étiquette non inhibée. Le code de cette étiquette est alors identifiée. En fin de cycle d'identification, sur une seule commande de l'interrogateur, l'étiquette identifiée s'inhibe définitivement et les autres étiquettes lèvent leur inhibition momentanée. La procédure d'identification est ensuite réinitialisée pour identifier une autre étiquette. Ces opérations sont répétées autant de fois que nécessaire, de façon à ce que toutes les étiquettes soient identifiées une par une.

Ce procédé d'identification successive de chaque code revient à parcourir un arbre de recherche binaire dont chaque branche représente l'une des deux valeurs possibles d'un bit d'un code d'identification.

Selon ce procédé, l'arbre de recherche est parcouru entièrement, depuis la racine, pour l'identification de chaque code. Une même branche de l'arbre de recherche binaire peut donc être parcourue plusieurs fois. Le temps d'interrogation des étiquettes, selon ce procédé, est donc relativement important puisque le parcours de l'arbre binaire se fait à partir de la racine de l'arbre pour chacune des étiquettes. On a ainsi un temps de lecture de N x n, si l'on considère que N est la longueur des codes d'identification et n le nombre d'étiquettes présentes. Cette méthode est donc d'autant plus longue que le nombre d'étiquettes est important.

Par ailleurs, le procédé décrit dans cette demande de brevet ne peut être appliqué qu'à un ensemble statique d'étiquettes qui ne sont lues qu'une seule fois.

Le document US 5 339 073 décrit un équipement de control d'accès comportant une unité d'interrogation qui émet un signal d'interrogation et une pluralité de récepteurs, chaque récepteur comportant un code d'identification propre différent de celui des autres récepteurs. Le signal d'interrogation est transmis simultanément à tous les récepteurs. L'identification des codes d'identification par l'unité d'interrogation est effectuée successivement, bit par bit, en parcourant un arbre de recherche binaire.

Le document EP 069 011 A2 décrit un appareil et une méthode pour identifier une pluralité de récepteurs comportant chacun un identifiant unique. Dans ce procédé, l'unité d'interrogation transmet simultanément aux récepteurs une chaîne de caractères et reçoit une réponse uniquement des récepteurs dont l'identifiant se termine par des bits identiques à ceux de la chaîne de caractères transmise par l'unité d'interrogation.

Exposé de l'invention

L'invention a justement pour but de remédier aux inconvénients des procédés décrits précédemment.

A cette fin, elle propose un procédé de lecture multiple d'un ensemble d'étiquettes statiques ou dynamiques dans lequel il n'est pas nécessaire, lors de la procédure d'interrogation, de remonter à la racine de l'arbre de recherche binaire pour chaque identification de code, ce qui permet de diminuer nettement le temps nécessaire à l'identification de ces étiquettes. L'invention propose également un système de mise en oeuvre de ce procédé.

De façon plus précise, l'invention concerne un procédé de lecture d'un ensemble d'étiquettes munies chacune d'un code d'identification binaire distinct et situées dans le champ électromagnétique d'un dispositif interrogateur, le procédé consistant en une identification des codes binaires des étiquettes au moyen d'émissions et de réceptions de signaux entre le dispositif interrogateur et les étiquettes, les codes étant tous de même taille N, l'identification de ces codes par le dispositif interrogateur étant effectuée successivement, bit par bit, en parcourant un arbre de recherche binaire ayant $\sum_{i=1}^{n} 2^i$ branches représentant chacune la valeur 0 ou 1 d'un des N bits, chaque branche étant connectée à la branche de valeur complémentaire 1 ou 0 par l'intermédiaire d'un noeud et chaque branche de l'arbre de recherche n'étant lue qu'une seule fois au cours d'une séquence de lecture de l'ensemble des étiquettes, le dispositif interrogateur ne reparcourant pas les branches déjà identifiées. Ce procédé se caractérise par le fait que chaque étiquette mémorise le dernier noeud de bifurcation parcouru pendant la séquence d'identification de son code.

Le procédé selon l'invention a ainsi l'avantage de pouvoir s'exécuter en un temps $T(N, n) < N \times n$ (avec n grand mais n petit devant $2^N$). Si toutes les étiquettes possibles étaient présentes, on aurait au maximum $2^N$-1 codes différents et donc $\alpha \times 2(2^N-1)$ transaction de base pour la présente demande, avec $\alpha$ qui est une constante représentant le ratio des temps des transactions de base et qui, selon l'invention (et selon le brevet FR-A-2 672 135), est inférieur à 2.

Le dispositif interrogateur mémorise chaque noeud de l'arbre de recherche et chaque étiquette mémorise le dernier noeud parcouru pendant la séquence d'identification de son code.

Selon un mode de réalisation de l'invention, le procédé consiste à parcourir l'arbre de recherche binaire, en largeur d'abord.

Selon un autre mode de réalisation de l'invention, ce procédé consiste à parcourir l'arbre de recherche binaire, en profondeur d'abord.

L'invention concerne également un système de lecture d'un ensemble dynamique d'étiquettes selon la revendication 5. Les étiquettes et le dispositif interrogateur du système comportent chacun des moyens émetteurs/récepteurs de signaux ainsi que des moyens de mémorisation, caractérisé en ce que le dispositif interrogateur comporte :

- un compteur d'étiquettes pour compter le nombre d'étiquettes présentes dans le champ du dispositif interrogateur ;
- un compteur de rang de bits ;
- un registre de mémorisation de la liste des codes lus ou en cours de lecture ; et
- un pointeur pour pointer vers cette liste des codes,

et en ce que chaque étiquette comporte :

- un compteur de numéros d'ordre ;
- un décompteur de numéros d'ordre ;
- un compteur d'étiquettes ;
- un compteur de rangs de bits ; et
- une bascule de première lecture.

Avantageusement, le dispositif interrogateur et les étiquettes comportent chacun un décompteur d'étiquettes.

Brève description des figures

- La figure 1 représente un exemple d'arbre de recherche binaire pour quatre étiquettes E1, E2, E3, E4 ;
- la figure 2 représente schématiquement l'architecture d'une étiquette ;
- la figure 3 représente schématiquement l'architecture du dispositif interrogateur ;

- la figure 4 représente le diagramme fonctionnel général de l'interrogation des étiquettes ;
- la figure 5 représente un chronogramme de base pour la lecture d'un noeud, extrait d'un séquement d'identification ;
- les figures 6A et 6B représentent les diagrammes fonctionnels respectifs de la phase de lecture du code et de la phase de vérification du code, pour une étiquette, dans le premier mode de réalisation de l'invention ;
- les figures 7A et 7B représentent les diagranumes fonctionnels respectifs de la phase de lecture du code et de la phase de vérification du code, pour le dispositif interrogateur, dans le premier mode de réalisation de l'invention ;
- la figure 8 représente un exemple de chronogramme pour la lecture des codes de quatre étiquettes dans le premier mode de réalisation de l'invention ;
- la figure 9 représente le diagramme fonctionnel de la phase de lecture du code, pour l'étiquette, dans le second mode de réalisation de l'invention ;
- la figure 10 représente un exemple de chronogramme pour la lecture des codes de quatres étiquettes dans le second mode de réalisation de l'invention ;
- la figure 11 représente un exemple de diagramme fonctionnel incluant la lecture et la vérification des codes, pour le dispositif interrogateur, dans le second mode de réalisation.

## Description détaillée de mode de réalisation de l'inventlon

L'invention concerne un procédé pour identifier les codes de toutes les étiquettes présentes dans le champ électromagnétique d'un dispositif interrogateur, en minimisant le temps de lecture de l'ensemble des codes.

Ce procédé consiste à parcourir, branche par branche, un arbre de recherche binaire dont chaque branche représente une valeur possible (0 ou 1) d'un bit d'un code d'identification. Autrement dit, l'arbre de recherche binaire est constitué par la description exhaustive de tous les codes possibles pour les N bits constituant les codes.

Le parcours de l'arbre se fait de sorte que chaque branche de l'arbre n'est parcourue qu'une seule fois et de façon à ce que la lecture d'un nouveau code se fait en parcourant l'arbre à partir du dernier noeud rencontré. Le dispositif interrogateur ne reparcourt donc pas les branches déjà identifiées.

Le procédé de l'invention est appliqué à un ensemble d'étiquettes qui ont toutes un code d'identification de même taille, c'est-à-dire contenant le même nombre de bits.

Selon ce procédé, les codes d'identification seront lus successivement, bit par bit, au fur et à mesure que les branches de l'arbre binaire sont parcourues.

Le procédé est basé sur le fait que lorsqu'un code a été déterminé, la reprise du parcours, pour déterminer les autres codes, se fait à partir du deuxième noeud où les deux branches sont à parcourir et que l'on a mémorisé dans l'étiquette et le dispositif interrogateur, c'est-à-dire à partir du noeud de bifurcation et non à partir de la racine, comme c'était le cas dans l'art antérieur.

Pour cela, le procédé de l'invention comporte, notamment, une mémorisation de tous les noeuds de l'arbre binaire déjà parcourus et pour lesquels les réponses des étiquettes ont montré qu'il fallait parcourir les deux branches pendant la séquence de lecture en cours. Cette mémorisation est faite simultanément par le dispositif interrogateur, pour tous les noeuds de l'arbre, et à bord de l'étiquette, pour le noeud qui l'intéresse, c'est-à-dire le dernier noeud parcouru lors de la séquence de lecture de son code.

De plus, selon l'invention, le dispositif interrogateur réémet les informations transmises par les étiquettes à chaque étape de l'identification, ce qui permet, à celles-ci, d'une part de synchroniser leurs émissions et, d'autre part, de gérer le parcours de l'arbre binaire ainsi que leurs émissions en fonction de leurs codes. Ceci permet aussi, de façon avantageuse, de connaître le code des autres étiquettes présentes dans le champ électromagnétique et ce connaître le nombre d'étiquettes présentes dans ce champ électromagnétique.

Ainsi, ce procédé de l'invention permet, non seulement une lecture de l'ensemble des étiquettes présentes dans le champ électromagnétique, pour un ensemble d'étiquettes statique, mais il permet également l'identification de toutes les étiquettes entrantes ou sortantes dans le cas d'un ensemble d'étiquettes dynamique. Autrement dit, ce procédé permet de détecter et d'identifier une étiquetée entrant dans le champ électromagnétique, après que la séquence d'identification ait commencé. Pour cela, une étiquette qui entre dans le champ électromagnétique du dispositif interrogateur, pendant le cycle de lecture multiple, reste silencieuse jusqu'au cycle suivant. Parallèlement, le procédé permet, à une étiquette sortant du champ électromagnétique du dispositif interrogateur, pendant le cycle de lecture multiple, de ne pas être prise en compte. Dans ce cas, le dispositif interrogateur détecte une "erreur".

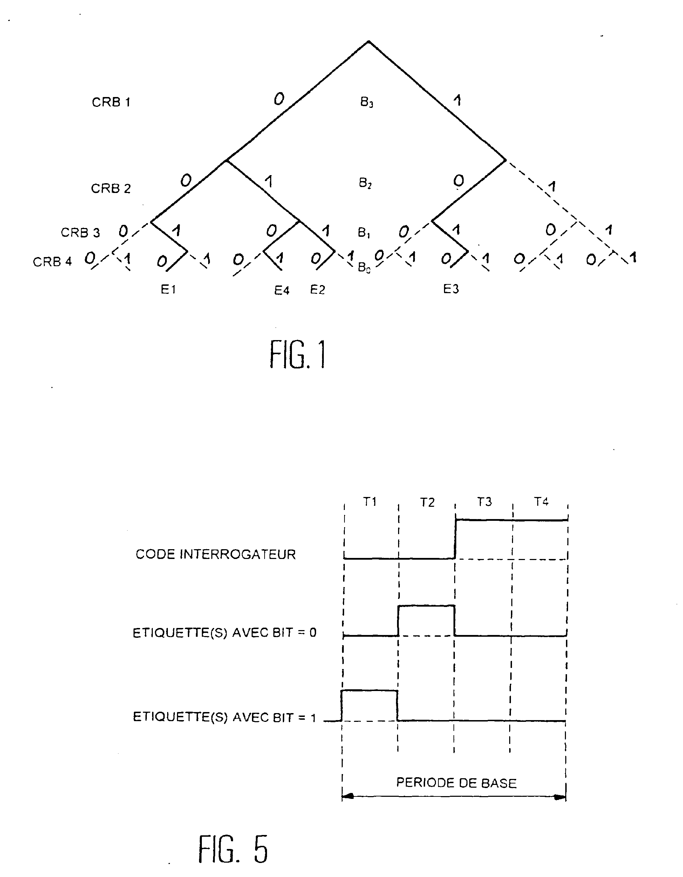

Sur la figure 1, on a représenté un arbre de recherche binaire pour un exemple où on cherche à déterminer les codes d'identification de quatre étiquettes. Pour cet exemple, les codes des étiquettes ont chacun quatre bits (N = 4) et sont les suivants :

- l'étiquette 1 (E1) a pour code 0010 ;
- l'étiquette 2 (E2) a pour code 0110 ;
- l'étiquette 3 (E3) a pour code 1010 ; et
- l'étiquette 4 (E4) a pour code 0101.

Sur cette figure 1, on a appelé B3 le bit de poids le plus fort, B2 et B1 les bits suivants et B0 le bit de poids le plus faible.

Comme on le voit sur cette figure 1, l'arbre ce recherche est construit en partant du bit de poids le plus fort, c'est-à-dire le bit B3, puis en décomposant les codes jusqu'au bit de poids le plus faible, c'est-à-dire le bit B0.

Sur cette figure 1, toutes les branches possibles de l'arbre de recherche sont représentées par des pointillés et les branches effectivement parcourues lors de la recherche des codes d'identification sont représentées en trait plein.

Les valeurs 0 et l'attribuées à chacune des branches représentent la valeur du bit représentée par ladite branche

Ainsi, le parcours en traits pleins situé le plus à gauche de la figure permet de retrouver le code de l'étiquette E1 puis celui sitôt à droite, le code de l'étiquette E4, puis celui de l'étiquette E2 et enfin celui de l'étiquette E3.

En quelques mots, le parcours suivi pour déterminer les codes de ces quatre étiquettes est le suivant. On vérifie, tout d'abord, si une au moins des étiquettes a son bit de poids le plus fort B3 à la valeur 0 ; trois étiquettes (les étiquettes E1 E4 et E2) répondent que leur bit B3 vaut 0. Le code de ces trois étiquettes commence donc par 0.

Le procédé se poursuit ainsi de branche en branche avec un retour au dernier noeud de bifurcation chaque fois qu'une séquence de lecture d'un autre code est entreprise.

Le procédé de l'invention qui vient d'être décrit succinctement est mis en oeuvre par un système étiquettes/lecteur (ou dispositif interrogateur).

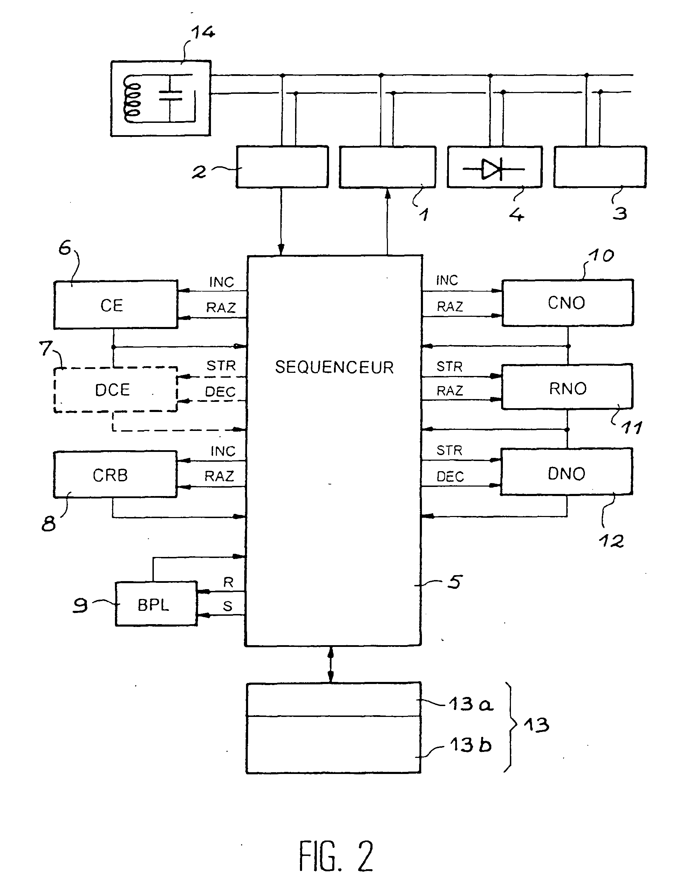

Sur la figure 2, on a représenté schématiquement l'architecture d'une étiquette. Chaque étiquette possède des moyens électromagnétiques de transmission (14), ainsi que des moyens électroniques de modulation (1) et de démodulation (2) qui lui permettent de communiquer des informations binaires vers le dispositif interrogateur, ou bien de recevoir des informations binaires de ce dispositif interrogateur. Chaque étiquette peut comporter, de plus, également des moyens électroniques (4) de récupération d'énergie, ainsi que des moyens électroniques (3) d'extraction d'horloge.

Ces moyens 1, 2, 3, 4 et 14 sont connus et décrits dans la demande de brevet FR-A-2 677 135 ; ils ne seront donc pas décrits de façon plus détaillée dans la présente demande.

Par ailleurs, chaque étiquette comprend des moyens électroniques (5) qui lui permettent de séquencer une suite d'actions à entreprendre en fonction des messages reçus du dispositif interrogateur, ainsi que des moyens de stockage temporaires ou permanents d'informations. Ces moyens de mémorisation (13) sont organisés en deux zones : une zone de stockage (13a) protégée en écriture et réservée au code d'identification et une zone (13b) de sauvegarde d'informations modifiables.

En outre, une au moins des étiquettes comporte :

- un registre de mémorisation de la liste des codes lus ou en cours de lecture,
- un pointeur pour pointer vers cette liste des codes de façon à permettre à cette étiquette d'identifier le code des autres étiquettes à partir d'émission du dispositif interrogateur.

Aux moyens de séquencements, appelés "séquenceur", sont connectés différents modules. L'un de ces modules est le compteur d'étiquettes CE, référencé 6, et dont le rôle est de permettre le comptage du nombre total d'étiquettes présentes pendant la séquence de lecture. Il permet, durant la séquence de recherche (ou séquence d'identification) en cours, de rester sur un rang de bit autant de fois qu'il y a d'étiquettes présentes. Sa valeur évolue de façon identique pour chaque étiquette, ainsi que pour le dispositif interrogateur.

Un autre module connecté sur le séquenceur 5 est le compteur de rangs de bits CRB, référencé 8. Ce compteur indique, sur les étiquettes, quel est le poids ou le rang du bit en cours de lecture sur les étiquettes. Il s'incrémente à chaque début de cycle de lecture de rang de bits.

Sur ce séquenceur est également connectée une bascule de première lecture BPL, référencée 9, dont le rôle est d'assurer l'inhibition de l'étiquette lorsque le code de cette dernière a été entièrement déterminé. Cette bascule BPL est initialisée à 0 puis mise à 1 à la fin de la première lecture correcte du code d'identification de l'étiquette à laquelle elle appartienl. Cela permet à l'étiauette, toujours présente dans le champ de l'interrogateur, mais déjà lue, de ne plus répondre à une requête de lecture multiple, mais de répondre à une requête de vérification de présence à l'aide de son numéro d'ordre selon un procédé décrit dans la demande de brevet déposée ce jour par la demanderesse et intitulée "procédé et système de lecture d'un ensemble dynamique d'étiquettes portant des codes d'identification distincts".

Un compteur de numéro d'ordre CNO, référencé 10, est également connecté sur le séquenceur 5. Ce compteur CNO s'incrémente chaque fois qu'un nouveau code de poids supérieur se présente, c'est-à-dire chaque fois qu'au moins une étiquette répond présente à chacune des deux branches de l'embranchement d'un noeud de l'arbre binaire (réception d'un code 11, comme expliqué ultérieurement). Ceci à condition que l'étiquette n'ait pas encore été interrogée pour le numéro de bit courant, ou bien qu'elle vienne de répondre avec indication d'un bit à 0. Ce compteur de numéros d'ordre CNO est initialisé à 0 en début de séquence.

Il est à noter que la méthode de numérotation, telle qu'elle vient d'être décrite, permet de ranger les codes d'identification de poids décroissant par numéro d'ordre croissant.

Un registre de numéros d'ordre RNO, référencé 11, est également connecté sur le séquenceur 5. Ce registre de numéros d'ordre RNO permet de sauvegarder, en mémoire, le numéro d'ordre de l'étiquette tel que calculé lors de la séquence de lecture. Ce numéro d'ordre permet une transaction plus rapide entre l'étiquette et le dispositif interrogateur dans la suite du procédé et, en particulier, dans la séquence de vérification. Ce compteur CNO est mis à 0 à l'initialisation de l'étiquette ou en cas d'erreur de lecture du code par le dispositif interrogateur.

Sur ce séquenceur 5 est également connecté un décompteur de numéros d'ordre DNO, ou décompteur de séquence de largeur, référencé 12. Ce décompteur 12 est décrémenté pendant la séquence de recherche sur un rang de bits, autant de fois qu'il y a d'étiquettes en cours d'identification. Ce décompteur 12 est assigné à la valeur du compteur de numéros d'ordre, à chaque début de cycle de scrutation (ou cycle de lecture) d'un nouveau rang de bits. Quand sa valeur atteint 1, l'étiquette comprend que c'est à son tour d'émettre le poids du rang de bit courant de son code d'identification. Ce décompteur DNO reste à 0 jusqu'à la fin du cycle de scrutation du rang de bit.

Sur ce séquenceur sont également connectés les moyens de mémorisation 13 organisés selon une zone de stockage 13a protégée en écriture et réservée au code d'identification et une zone de sauvegarde d'informations modifiable 13a.

Dans le premier mode de réalisation de l'invention, qui va être décrit ultérieurement, l'étiquette comporte également un décompteur d'étiquettes DCE, référencé 7. Ce décompteur DCE, en se décrémentant, permet de connaître quel code la séquence est en train de lire. Quand il atteint la valeur 0, cela signifie que le rang de bits est entièrement scruté. On peut alors passer au rang de bits suivant en incrémentant le compteur de rang de bits 8. Ce décompteur d'étiquettes 7 est initialisé à la valeur du compteur d'étiquettes 6 à chaque début de séquence portant sur un rang de bits.

Ce décompteur DCE, comme le décompteur DNO reçoit du séquenceur 5 une instruction de décrémentation DEC et une instruction de mémorisation STR. Les compteurs CE, CRB et CNO reçoivent, par contre, une instruction de remise à zéro RAZ et une instruction d'incrémentation INC. Quant au registre RNO, il reçoit une instruction de mémorisation STR et une instruction de remise à zéro RAZ et la bascule BPL reçoit des instructions de remise à zéro R et de mise à un S. Chaque module 6 à 12 renvoit, au séquence 5, sa valeur courante.

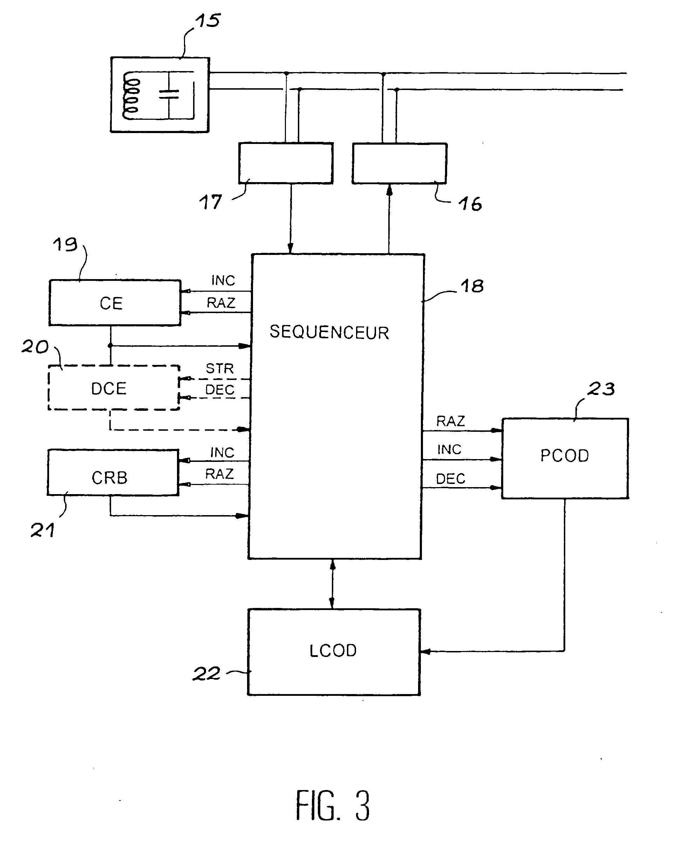

Sur la figure 3, on a représenté schématiquement l'architecture d'un dispositif interrogateur, tel qu'utilisé dans l'invention. Ce dispositif interrogateur comporte ces moyens électromagnétiques de transmission, référencés 15, ainsi que des moyens électroniques de modulation 16 et de démodulation 17 qui lui permettent de communiquer des informations binaires vers l'ensemble d'étiquettes, ou bien de recevoir des informations binaires de ces dernières.

Ce dispositif interrogateur comporte, par ailleurs, des moyens électroniques 18 (appelés séquenceur) qui lui permettent de séquencer une suite d'actions à entreprendre en fonction des messages reçus des étiquettes. Il comporte, en outre, des moyens 22 de stockage temporaire ou permanent d'informations.

Comme on le voit sur la figure 3, le séquenceur 18 échange des informations avec une pluralité de modules. Parmi ces modules, il y a un compteur d'étiquettes CE 19 et un compteur de rangs de bits CRB 21, qui ont des rôles similaires à ceux des modules équivalents de l'étiquette (figure 2). Ils ne sont donc pas décrits de façon plus précise, en relation avec cette figure 3.

Tout comme les étiquettes, le dispositif interrogateur peut également comporter un décompteur d'étiquettes DCE 20, utilisé uniquement dans le premier mode de réalisation de l'invention qui sera décrit ultérieurement.

Les moyens de stockage d'informations 22 comprennent, notamment, une liste LCOD des codes en cours de lecture ou déjà lus. Plus précisément, cette liste des codes en cours de lecture ou déjà lus, est une zone mémoire où le dispositif interrogateur range et ordonne les codes en cours de lecture ou déjà lus. Ce rangement est dynamique, au sens où une étiquette peut à tout moment quitter le champ de l'interrogateur ou y pénétrer. Il est donc possible d'insérer ou de supprimer des éléments (c'est-à-dire des codes) de cette liste. Un pointeur de liste PCOD, référencé 23, permet de pointer l'élément en cours de traitement de cette liste.

Le système étiquettes/lecteur qui vient d'être décrit met en oeuvre un procédé de lecture multiple d'étiquettes avec un temps ce parcours de l'arbre binaire minimum.

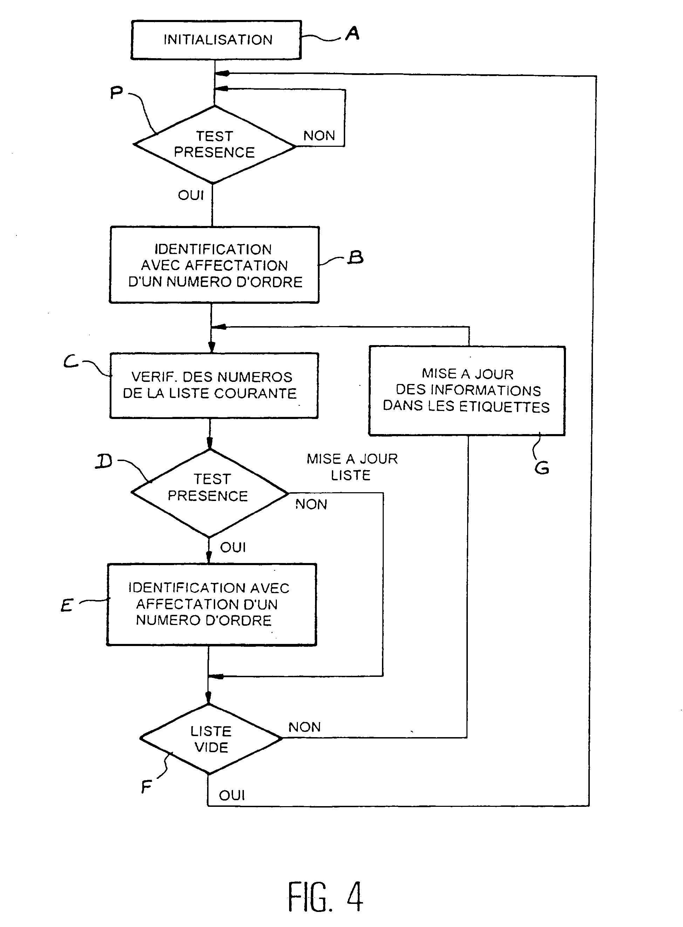

On a représenté, sur la figure 4, les étapes principales de ce procédé.

D'une façon générale, ce procédé comporte une première étape d'initialisation, référencée A, suivie d'un test de présence P qui se poursuit, dans le cas positif, par une étape B d'identification des étiquettes avec affectation d'un numéro d'ordre ; dans le cas d'un résultat négatif du test P, le système se reboucle sur l'étape P jusau'à l'arrivée d'au moins une étiquette. Le procédé se poursuit ensuite par une étape C de vérification des numéros courants de la liste et de gestion des numéros d'ordre en prenant en compte les sorties éventuelles d'étiquettes ; un test D consiste ensuite à vérifier la présence d'au moins une étiquette nouvelle dans le champ du dispositif.

Si ce test de présence D est vérifié, alors le procédé se poursuit par une phase d'identification E avec affectation d'un numéro d'ordre, puis un test F consistant à vérifier si la liste est vide.

Si le test de présence D donne une réponse négative, alors le procédé passe directement au test F de vérification de la liste vide.

Si cette liste est vide, alors le procédé reprend au début de l'étape B où il se met en attente d'arrivée de nouvelles étiquettes. Au contraire, si elle n'est pas vide, une étape G de mise à jour des informations dans l'étiquette est effectuée.

Le protocole de base du procédé du point de vue du bit, se situe au niveau d'un noeud de l'arbre de recherche. L'échange d'informations au niveau du bit va être expliqué à partir de la séquence représentée sur la figure 4. Cette séquence peut être exécutée en quatre cycles d'horloge T1, T2, T3, T4 :

- T1 qui est le cycle d'émission d'un signal par les étiquettes dont le bit en cours de scrutation vaut 1 ;
- T2 qui est le cycle d'émission d'un signal par les étiquettes dont le bit en cours de scrutation vaut 0 ;
- T3, T4 qui sont les cycles de réémission par le dispositif interrogateur d'un code indiquant le doublé binaire reçu pendant les cycles T1 et T2, à savoir code 00, code 01, code 10 et code 11

Il est à noter qu'une étiquette active est une étiquette dont le début du code correspond au noeud courant de scrutation. Ceci permet, d'une part, de lire les bits du code d'identification de chaque étiquette active, d'autre part, de cadencer la lecture et également de diffuser vers toutes les étiquettes la même information concernant la présence éventuelle des deux branches du noeud en cours de scrutation. Ainsi, le dispositif interrogateur et toutes les étiquettes disposent des mêmes informations et peuvent donc potentiellement effectuer les mêmes calculs.

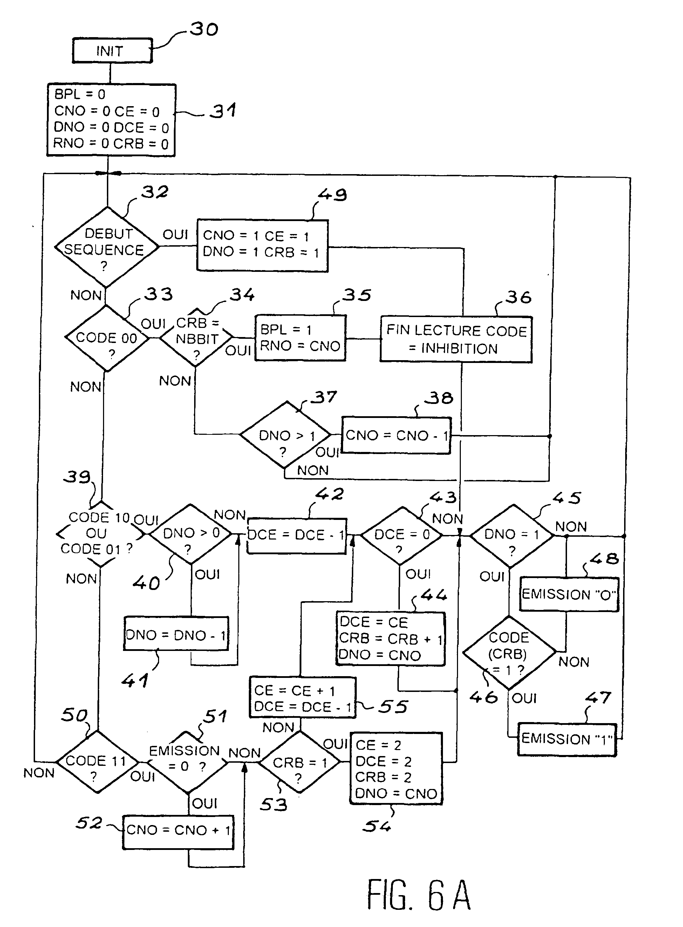

Sur la figure 5, on a donc représenté le chronogramme de base pour la lecture d'un noeud avec les cycles T1, T2, T3 et T4 qui représentent une période de base ; chaque ligne du chronogramme représente un signal différent : la première ligne représente le signal du code interrogateur ; la deuxième ligne représente le signal d'une ou plusieurs étiquettes avec un bit à 1 et la troisième ligne, le signal d'une ou plusieurs étiquettes avec un bit à 0.

Le code interrogateur, appelé dans l'exemple représenté sur cette figure "code x, y" contient au moins deux bits x, y, correspondants aux informations reçues pendant les créneaux T1 et T2. Autrement dit .

- code xy = x pendant T1, et
- y pendant T2
- x = 1 si présence d'un bit à 1 pendant T1, sinon 0,
- y = 1 si présence d'un bit à 0 pendant T2, sinon 0.

Ceci donne quatre possibilités de codes : code 00, code 10, code 01 et code 11.

Selon l'invention, le parcours de l'arbre binaire peut se faire selon deux modes différents, c'est-à-dire avec un balayage en largeur d'abord, ou avec un balayage en profondeur d'abord.

Selon le premier mode de réalisation, l'arbre de recherche binaire, constitué par la description exhaustive de tous les codes possibles, est balayé en largeur d'abord. Les codes sont donc lus simultanément, code par code, selon un ordre décroissant pour un rang de bits donné. Ils sont aussi lus bit par bit jusqu'à ce que les bits de poids les plus faibles soient trouvés.

Les étapes décrivant le procédé de l'invention selon ce mode de réalisation comportent deux boucles imbriquées dans la séquence de recherche : une première boucle indicée sur le rang de bit et une deuxième boucle indicée sur le nombre d'étiquettes répertoriées à un instant donné. Ce nombre n'est bien sûr pas connu au début de la séquence de lecture ; il évolue au fur et à mesure du parcours de l'arbre de recherche, chaque fois que au moins deux étiquettes sont présentes à un embranchement binaire, c'est-à-dire à un noeud.

Ce mode de réalisation est mis en oeuvre au moyen du système représenté sur les figures 2 et 3 dans le mode de réalisation où le lecteur et les étiquettes comportent chacun un décompteur d'étiquettes DCE.

Le principe de base de ce mode de réalisation repose sur le cadencement et la rediffusion vers toutes les étiquettes des messages reçus au moment de la lecture de code précédente, par le dispositif interrogateur. Ainsi, chaque étiquette, informée des émissions du groupe d'étiquettes présentes, a les moyens d'analyser la situation présente : elle peut savoir quand elle doit émettre ; elle peut aussi compter les autres étiquettes.

Chaque étiquette dispose ainsi de toutes les informations pour lire tous les codes présents, si cela s'avère nécessaire, dans une application particulière. Dans ce cas, l'étiquette applique le même algorithme que celui du dispositif interrogateur.

La séquence de recherche commence par un message de début de séquence, envoyé par le dispositif interrogateur et se termine par un message de fin de séquence. Elle comporte essentiellement ceux phases. Une première phase de scrutation (ou lecture) des codes présents, puis une seconde phase de validation des codes reçus.

Selon ce procédé, la phase d'identification des codes se fait en parcourant l'arbre de recherche binaire de noeuds en noeuds, selon les parties de codes (bits Ce poids les plus forts) déjà identifiées. Le premier bit suivant la partie déjà identifiée du code en cours d'identification est lu au noeud suivant. A chaque pas correspondant à un noeud binaire, on réserve deux créneaux temporels, afin qu' une étiquette dont le code commence par l'arborescence menant de la racine à ce noeud puisse répondre. Cette étiquette répond dans le premier créneau si le bit suivant est à 1, ou dans le second créneau si le bit suivant est à 0.

Le dispositif interrogateur cadence la séquence en retournant un code de deux bits, indiquant les bits lus : code 01 pour pas de bit à 1, mais 1 bit à 0, etc.

Ainsi, deux étiquettes dont les codes se différencient à ce rang de bits, peuvent répondre chacune dans un des deux créneaux. On détecte alors la présence d'au moins une nouvelle étiquette.

Il est à noter que la partie déjà lue d'un code en cours de lecture peut correspondre au début de plusieurs codes. En rebouclant sur l'indice fixe correspondant au nombre de bits du code d'identification, ainsi que sur l'indice incrémental du nombre d'étiquettes détectées jusqu'à ce moment, toutes les étiquettes présentes peuvent être lues.

A la fin ce la phase de lecture, le dispositif interrogateur balaye l'ensemble des étiquettes en confirmant ou en infirmant la bonne lecture de leur code d'identification respectif. Il s'agit de la phase de vérification des codes ; celle-ci est basée sur l'utilisation de numéros d'ordre, attribués à chaque étiquette ; le rôle de ces numéros d'ordre ainsi que le procédé d'attribution de ces numéros sont décrits dans la demande de brevet intitulée "procédé et système de lecture d'un ensemble dynamique d'étiquettes portant des codes d'identification distincts", déjà citée précédemment.

Pour indiquer qu'elle a été correctement lue une première fois et que son numéro d'ordre est correct, l'étiquette renvoie alors un acquittement. Son bit de première lecture est alors validé. Au contraire, en cas de mauvaise lecture de son code, le dispositif interrogateur envoie un message d'erreur et l'étiquette se remet en attente d'une autre première lecture.

Si une étiquette pénètre le champ du dispositif interrogateur pendant la séquence de lecture, elle doit attendre le message de début de séquence suivant avant de pouvoir répondre. Elle ne perturbe pas, et n'est pas perturbée, par le dialogue en cours entre le dispositif interrogateur et les autres étiquettes.

Si une étiquette sort du champ de l'interrogateur pendant la séquence d'identification, alors la lecture du prochain bit ne renvoie aucune réponse de bit suivant à 1 ou 0, excepté si une autre étiquette présente a le même début de code. Dans le premier cas, l'interrogateur envoie un message de type code00, qui déclenche une décrémentation ces compteurs de numéros d'ordre de chaque étiquette qui n'a pas encore été lue au cours de la séquence de scrutation correspondante au rang de bit courant. Le compteur d'étiquettes de chacune des étiquettes est également décrémenté, de même que le compteur d'étiquettes du dispositif interrogateur ; le dispositif interrogateur supprime alors le code de sa liste.

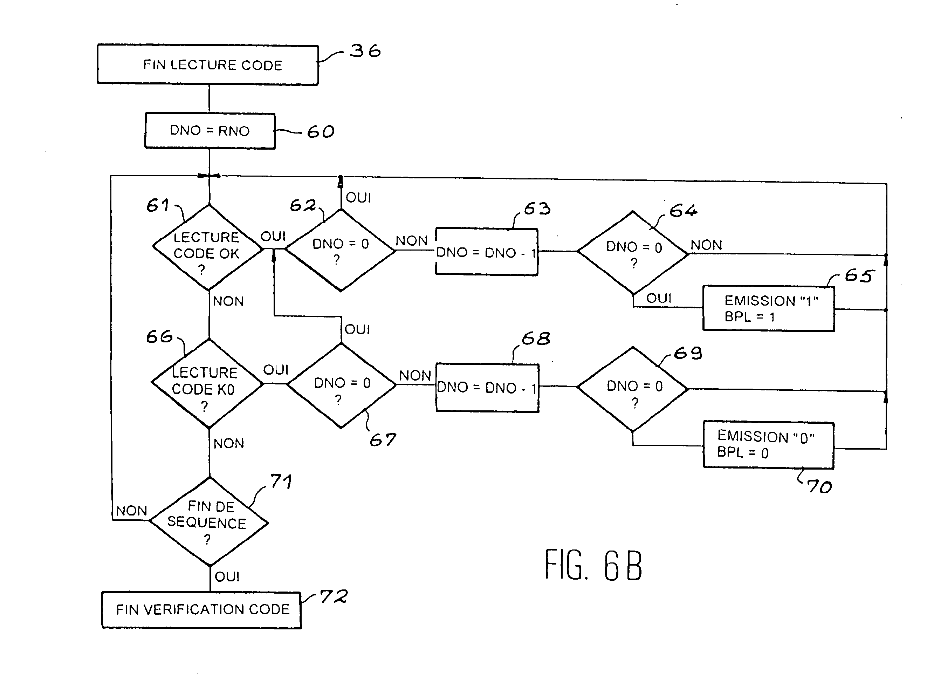

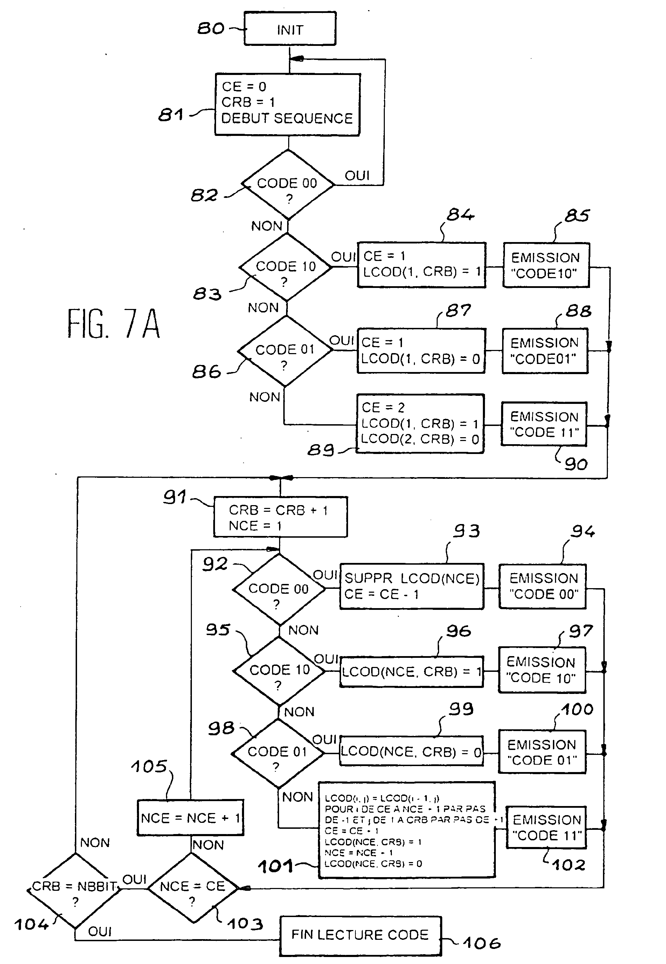

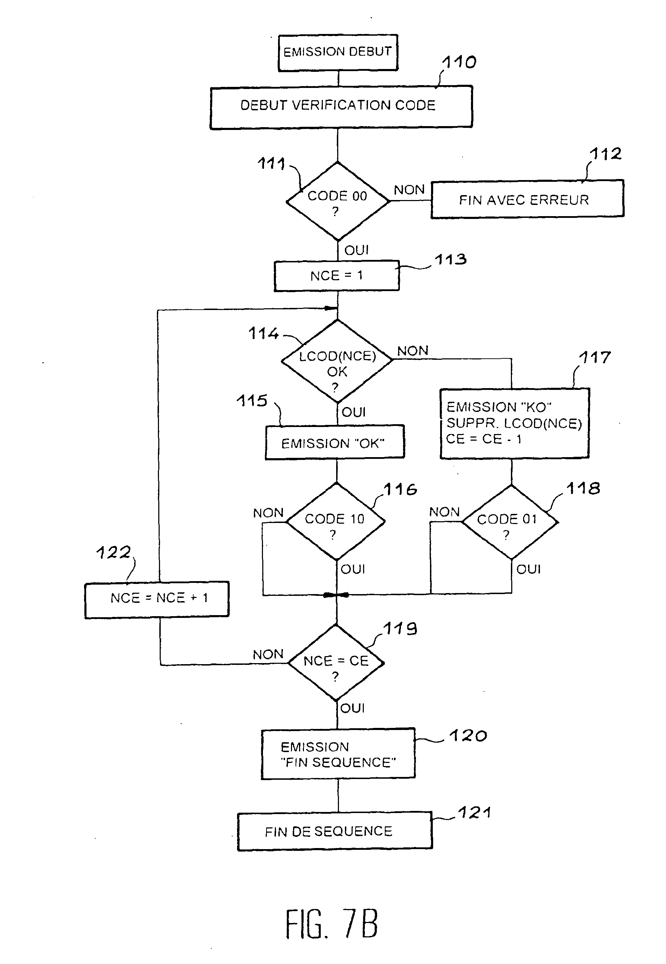

Cette séquence de recherche va être décrite de façon plus détaillée, en se référant aux figures 6A et 6B, 7A et 7B. En particulier, les figures 6A et 7A représentent les schémas fonctionnels de la phase d'identification des codes présents et les figures 6B et 7B représentent les schémas fonctionnels de la phase de validation des codes reçus.

Pendant la phase d'identification, le dispositif interrogateur peut utiliser et émettre huit codes différents. Ces codes sont :

- code début séquence : ce code permet d'initialiser toutes les étiquettes ;
- code00, code10, code01, code11 : ces codes permettent d'informer les étiquettes sur la progression du parcours de l'arbre de recherche ;
- codeOK : ce code indique à l'étiquette, dont la lecture du code vient de se terminer, que ledit code est valide. L'étiquette se met alors en inhibition ;
- codeKO : ce code est prévu pour invalider la lecture d'un code, dans le cas d'une erreur, et pour remettre l'étiquette en attente d'un prochain cycle de lecture ;
- code fin séquence : ce code fige l'état des différents compteurs, décompteurs et bascules jusqu'au cycle suivant.

Le diagramme fonctionnel, du point de vue de l'étiquette, de cette phase de lecture selon le premier mode de réalisation est représentée sur la figure 6A.

Ce procédé comporte une première étape 30 d'initialisation puis une étape 31 de mise à 0 de la bascule de première lecture BPL, du compteur de numéros d'ordre CNO, du compteur d'étiquettes CE, du décompteur de numéros d'ordre DNO, du décompteur d'étiquette DCE, du registre de numéros d'ordre RNO et du compteur de rangs de bits CRB. Lorsque ces initialisations ont été faites, le procédé se poursuit par un test 32, consistant à vérifier s'il s'agit du début de la séquence ; si c'est le cas, alors le compteur de numéro d'ordre CNO est mis à 1, le décompteur de numéro d'ordre DNO à 1, le compteur d'étiquette CE à 1 et le compteur de rangs de bits CRB à 1 (bloc 49).

Le procédé se poursuit ensuite par un test 45, consistant à vérifier si le décompteur de numéro d'ordre DNO est égal à 1. Si c'est le cas, alors un test 46 vérifie si le bit du code est égal à 1. Dans l'affirmative, l'étiquette émet un "1" à l'étape 47 et retourne au début du test 32 ; dans la négative, l'étiquette émet un "0" et le procédé reprend au début du test 32.

De même, si le test 45 donne comme réponse que DNO n'est pas égal à 1, alors le procédé reprend au début du test 32.

Dans le cas où il ne s'agit pas du début de la séquence (test 32), alors un test 33 consiste à vérifier si le code envoyé par l'interrogateur est un code00. Si c'est le cas, alors on vérifie, en 34, si le compteur de rangs de bits CRB est égal au nombre de bits courants (NBBIT) : si oui, alors la bascule de première lecture est mise à 1 et le registre du numéro d'ordre RNO est mis à la valeur du compteur de numéro d'ordre CNO, au bloc 35 ; il y a alors inhibition, jusqu'à la fin de la séquence, de l'étiquette concernée (bloc 36) ; si non, alors le procédé se poursuit par un test 37 qui consiste à vérifier si le décompteur de numéros d'ordre DNO est supérieur à 1 et, dans l'affirmative, le compteur de numéros d'ordre CNO est décrémenté de 1 puis retourne au début du test 32 ; et, dans la négative, le procédé retourne directement au début du test 32.

Si au test 33, il s'avère que ce n'est pas le code00, alors un test 39 est effectué pour vérifier s'il s'agit du code10, ou du code01. Si c'est le cas, alors on regarde (test 40) si le décompteur de numéros d'ordre DNO est supérieur à 0 ; dans l'affirmative, ce décompteur DNO est décrémenté de 1 (bloc 41), puis, le procédé se poursuit au bloc 42 ; dans le cas où DNO n'est pas supérieur à 0, le procédé passe directement à l'étape 42 où le décompteur d'étiquettes DCE est décrémenté de 1.

Un test 43 consiste ensuite à vérifier si ce décompteur d'étiquettes DCE est égal à 0 ; si oui, le décompteur d'étiquettes DCE est mis à la valeur du compteur d'étiquettes CE, le compteur de rangs de bits CRB est incrémenté de 1 et le décompteur de numéros d'ordre DNO est mis à la valeur du compteur de numéros d'ordre CNO (bloc 44).

Après l'étape 44 et si la réponse au test 43 est négative, le procédé se poursuit par le test 45, décrit précédemment.

S'il ne s'agit ni àu code01 ou du code10, au test 39, alors on vérifie si l'on est en présence du code11 (test 50). Si ce n'est pas le cas, le procédé reprend au début du test 32. Si c'est le cas, alors le procédé se poursuit par un test 51 qui consiste à vérifier s'il y a eu émission d'un "0" par l'étiquetée : si oui, le compteur de numéros d'ordre CNO est incrémenté de 1, à l'étape 52. Après l'étape 52 et s'il n'y a pas eu émission d'un "0", au test 51, alors le procédé se poursuit par un test 53 consistant à vérifier si le compteur de rangs de bits CRB est égal à 1. Si c'est le cas, alors le compteur d'étiquettes CE, le décompteur d'étiquettes DCE et le compteur de rangs de bits CRB sont mis à 2 et le décomoteur de numéros d'ordre DNO est égalisé à la valeur du compteur de numéros d'ordre CNO (bloc 54). Le procédé se poursuit ensuite par le test 45 déjà décrit.

Si, au test 53, il s'avère que CRB n'est pas égal à 1, alors le compteur d'étiquettes CE est incrémenté de 1 et le décompteur d'étiquettes DCE est décrémenté de 1 (bloc 55) ; le procédé se poursuit ensuite par le test 43, déjà décrit.

Sur la figure 6B, on a représenté schématiquement le diagramme fonctionnel de la phase de vérification du code, selon le premier mode de réalisation, du point de vue de l'étiquette. Pour cette phase de vérification du code, le procédé commence au niveau du bloc 36 de fin de lecture du code, décrit dans la figure 6A.

Lorsque la fin de lecture de code est détectée, c'est-à-dire lorsque l'étiquette a été inhibée, alors le décompteur de numéros d'ordre DNO est mis à la valeur du registre de numéros d'ordre RNO (bloc 60).

Un test 61 consiste ensuite à vérifier si l'interrogateur a émis un codeOK. Si c'est le cas, alors un test 62 vérifie si le décompteur de numéros d'ordre DNO est égal à 0 ; dans ce cas, le procédé reprend au début du test 61 ; dans le cas contraire, le décompteur de numéros d'ordre DNO est décrémenté de 1, au bloc 63, puis un test 64 vérifie si la nouvelle valeur du décompteur de numéros d'ordre DNO est égale à 0 : si oui, il y a émission, au bloc 65, par l'étiquette d'un "1" et la bascule de première lecture BPL est mise à 1 ; si non, le procédé reprend en début du test 61.

Si la réponse au test 61 est négative alors un test 66 consiste à vérifier si l'interrogateur a émis un codeKO. Si c'est le cas, alors on vérifie (test 67) si le décompteur de numéros d'ordre DNO est à 0 ; dans l'affirmative, le procédé reprend au début du test 62 ; dans la négative, le décompteur de numéros d'ordre DNO est décrémenté de 1 (bloc 68), puis un test 69 vérifie si la nouvelle valeur du décompteur de numéros d'ordre est égale à 0. si c'est le cas, alors l'étiquette émet un "0" et la bascule de première lecture BPL est mise à 0 (bloc 70), puis le procédé reprend au début du test 61. Si ce n'est pas le cas, le procédé reprend directement au test 61.

Si aucun codeOK ou codeKO n'est lu, alors un test 71 consiste à vérifier si c'est la fin de la séquence ; dans ce cas, on considère que la phase de vérification du code est terminée (bloc 72) ; dans le cas contraire, le procédé reprend au début du test 61.

Sur la figure 7A, on a représenté le schéma fonctionnel du procédé de l'invention, exécuté par le dispositif interrogateur, pour la phase de lecture des codes.

Ce procédé commence par une étape 80 d'initialisation du dispositif interrogateur. Il se poursuit par une étape 81 de mise à 0 du compteur d'étiquettes CE, de mise à 1 du compteur de rangs de bits CRB et d'envoi d'un message de début de séquence.

Il est à noter que LCOD est une liste de codes à NBBIT ; LCOD (NCE, CRB) correspond au bit n° CRB du code de l'étiquette n° NCE (numéro courant d'étiquette) avec NCE = 1 et CRB = 1 dans l'étape 84 ; LCOD (NCE) correspond au code de l'étiquette n° NCE.

Un test 82 vérifie ensuite si un code00 a été reçu. Si c'est le cas, alors le procédé reprend au début de l'étape 81. Dans le cas contraire, le procédé passe au test 83 qui vérifie s'il s'agit d'un code10 : si oui, le compteur d'étiquettes CE est mis à 1 et le bit 1 du premier code est mis à 1 (bloc 84). [(LCOD(C1, CRB) avec CRB = 1, CRB étant le numéro du bit du code de l'étiquette n° NCE (numéro courant d'étiquette)]. Le procédé se poursuit alors par une étape 85 d'émission d'un code10 puis par l'étape 91 qui sera décrite ultérieurement.

Si, au test 83, il ne s'agit pas d'un code10, alors le dispositif interrogateur vérifie, dans un test 86, s'il s'agit d'un code01. Si c'est le cas, alors le compteur d'étiquettes CE est mis à 1 et le bit 1 du premier code est mis à 0, à l'étape 87, puis il y a émission d'un code10 à l'étape 88 ; 5 le procédé se poursuit ensuite à l'étape 91. Si, au test 86, le code reçu n'est pas code01, c'est donc qu'il y a au moins une étiquette avec un bit à 0 et au moins une avec un bit à 1 (code 11) ; on initialise alors la liste avec une étiquette à 1 pour le premier bit et une étiquette à 0 pour le premier bit et le compteur d'étiquettes CE est mis à 2. Un code 11 est ensuite émis à l'étape 90.

Le codexy n'a pas la même signification physique dans le cas des tests 82, 83, 86 que lors des émissions de message 85, 88, 90, mais a la même signification fonctionnelle. En effet, le codexy des tests 82, 83, 86 est la synthèse des informations émises par les étiquettes pendant les périodes T1 et T2 du cycle de lecture de base décrit en figure 5, et correspond à un état :

x = 0 indique l'absence d'étiquette avec un bit à 1, et x = 1 la présence d'un bit à 1 ;

de même :

y = 0 indique l'absence d'étiquette avec un bit à 0, et y = 1 la présence d'un bit à 0.

Par contre, le code xy des émissions 85, 88, 90 correspond au message envoyé par l'interrogateur selon la valeur du bit des étiquettes en cours de scrutation.

Ensuite, l'étape 91 consiste à incrémenter le compteur de rangs de bits CRB et à mettre à 1 le numéro courant d'étiquette NCE. Des tests 92, 95, 98, respectivement identiques aux tests 82, 83 et 86, consistent à vérifier s'il s'agit d'un code00, d'un code10 ou d'un code01. Si le test 92 est vérifié, l'étape 93 consiste à supprimer de la liste LCOD le code de l'étiquette n° NCE courant et à décrémenter le compteur d'étiquettes CE. Une émission d'un code00 est ensuite effectuée à l'étape 94.

Si le test 92 n'est pas vérifié, un test 95 est mis en oeuvre. Si la réponse à ce test est positive, c'est-à-dire s'il y a au moins une étiquette avec le bit courant à "1" et aucune avec ce bit à "0", le bit courant (CRB) de l'étiquette n° NCE est mis à 1 dans la liste LCOD (bloc 96), puis un message code10 est émis au bloc 97.

Si la réponse au test 95 est négative, le procédé se poursuit par un test 98 qui consiste à vérifier s'il s'agit du code01, c'est-à-dire s'il y a au moins une étiquette avec le bit courant à "0" et aucune avec ce bit à "1" ; si c'est le cas, le bit courant (CRB) de l'étiquette n° NCE est mis à "0" dans la liste des codes LCOD, à l'étape 99, puis une émission d'un code 01 a lieu à l'étape 100.

Si la réponse au test 98 est négative c'est-à-dire s'il y a, à la fois, au moins une étiquette avec le bit CRB à "1" et au moins une avec ce bit à "0", alors le compteur d'étiquettes CE est incrémenté, le bit courant CRB de l'étiquette NCE est mis à 1 dans la liste LCOD, NCE est incrémenté et le bit courant CRB de l'étiquette NCE est mis à 0 dans la liste LCOD après duplication du début du code avec le code de l'étiquette précédente (NCE-1). Puis il y a émission d'un code11 à l'étape 102.

A la sortie de chacune des étapes 94, 97, 100 et 102, le procédé se poursuit par un test 103 de vérification du NCE. Si le NCE n'est pas égal au CE, alors le NCE est incrémenté de 1, à l'étape 105, puis le procédé reprend au test 92. Si ce NCE est égal au compteur d'étiquettes CE, alors un nouveau test 104 est effectué pour vérifier si le compteur de rangs de bits CRB est égal au nombre de bits du code d'identification NBBIT : si oui, la séquence de lecture est terminée (bloc 106) ; si non, le procédé reprend à l'étape 91.

Sur la figure 7B, on a représenté le diagramme fonctionnel de la phase de vérification des codes, pour le dispositif interrogateur.

Ce procédé de vérification du code commence par une étape 110 d'annonce du début de la vérification des codes, « émission début ».

Ensuite, un test 111 consiste à vérifier s'il s'agit du code00 ; si ce n'est pas le cas, un message de fin de séquence avec erreur est émis à l'étape 112. S'il s'agit bien du code00, alors le NCE est mis à 1, à l'étape 113.

Un test 114 consiste ensuite à vérifier si le code qui vient d'être lu est correct. Si c'est le cas, alors il y a émission d'un code "OK" (étape 115). Un test 116 est alors effectué pour vérifier s'il s'agit d'un code10. Quel que soit le cas, le procédé se poursuit par l'étape 119 qui sera décrite ultérieurement.

Si la réponse au test 114 est négative, alors un message "codeKO" est émis à l'étape 117, le code LCOD (NCE) est supprimé de la liste et le compteur d'étiquettes CE est décrémenté. Un test 118 vérifie ensuite, s'il s'agit d'un code01 et, quel que soit le résultat de ce test, le procédé se poursuit par un test 119. Ce dernier consiste à vérifier si le NCE est égal au compteur d'étiquettes CS. Si c'est le cas, alors il y a une émission d'un message de fin de séquence (à l'étape 120) et la séquence est considérée terminée, à l'étape 121. Si le test 119 donne une réponse négative, alors le NCE est incrémenté de 1 à l'étape 122 et le procédé est repris au début du test 114.

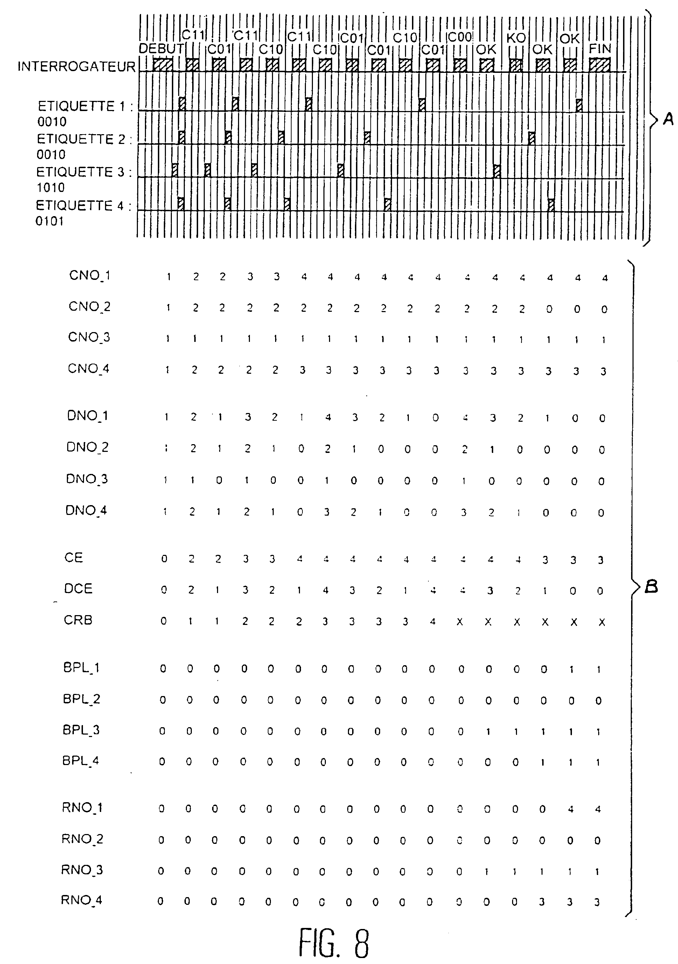

Sur la figure 8, on a représenté le chronogramme de recherche des codes de quatre étiquettes E1, E2, E3 et E4 correspondant à l'exemple donné sur la figure 1. Ce chronogramme détaille les informations échangées pendant la séquence de lecture multiple et indique les valeurs des différents registres et compteurs durant cette séquence.

On voit, sur la partie A de cette figure 8, que, selon le premier mode de réalisation du procédé, c'est-à-dire lorsque la scrutation de l'arbre se fait en largeur d'abord, le bit de poids le plus fort de chaque étiquette est détecté en premier, puis le second bit de poids le plus fort, etc., de sorte que les codes d'étiquettes sont tous déterminés en fin de séquence de lecture.

Sur la partie B de cette figure 8, on a représenté les valeurs du compteur de numéro d'ordre CNO, les valeurs du décompteur de numéros d'ordre DNO la valeur de la balance de première lecture BPL et la valeur du registre de numéros d'ordre RNO pour chacune de ces quatre étiquettes E1, E2, E3, E4, ainsi que la valeur du compteur d'étiquette CE, la valeur du décompteur d'étiquette DCE et la valeur du compteur de rangs de bits CRB.

Le second mode ce réalisation du procédé de l'invention consiste à effectuer une lecture de l'arbre binaire en profondeur d'abord. Dans ce mode de réalisation, l'arbre de recherche binaire, constitué par la description exhaustive de tous les codes possibles, est balayé en profondeur. Les codes sont lus bit par bit, jusqu'à ce que le bit de poids le plus faible soit trouvé. Puis, il seront lus séquentiellement code par code, selon un ordre décroissant, par exemple.

Ce procédé comporte principalement deux boucles imbriquées dans la séquence de recherche : une boucle indicée sur le nombre d'étiquettes répertoriées à un instant donné et une deuxième boucle indicée sur le rang de bit.

Le nombre d'étiquettes présentes n'est, bien sûr, par connu au début de la séquence de lecture et il évolue au fur et à mesure du parcours de l'arbre de recherche, chaque fois qu'au moins une étiquette est détectée à chaque branche du noeud de l'arborescence.

Dans ce mode de réalisation, l'architecture de l'étiquette, telle qu'elle a été décrite pour le mode de réalisation précédent, est globalement identique, excepté que l'étiquette ne comporte pas de décompteur d'étiquettes.

De même, en ce qui concerne l'architecture du dispositif interrogateur : dans ce second mode de réalisation, elle est identique à celle déjà décrite excepté que ledit dispositif ne comporte pas de décompteur d'étiquettes DCE.

Etant donné la différence minime concernant l'étiquette et le dispositif d'interrogation entre les deux modes de réalisation du procédé de l'invention, leurs architectures ne seront pas à nouveau décrite.

Il est à noter que les représentations et exemples, qui vont être donnés dans la suite de la description, supposent que le choix de la première branche à scruter est celui de celle correspondant à un bit à un, ce qui induit une lecture des codes dans un ordre décroissant. On comprendra toutefois qu'une autre approche peut être envisagée avec une lecture des codes dans un ordre croissant, les deux approches conduisant à des temps de lecture tout à fait identiques.

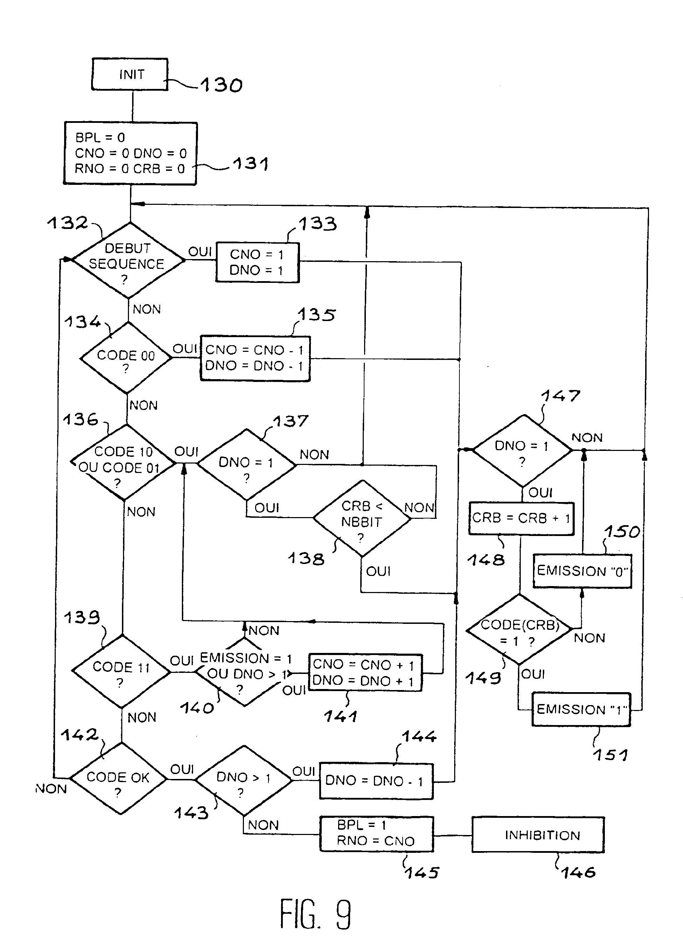

Sur la figure 9, on a représenté le diagramme fonctionnel de la phase de lecture des codes, par l'étiquette, pour le second mode de réalisation de l'invention.

Tout comme dans le premier mode de réalisation de l'invention, la séquence de recherche commence par un message de "début de séquence" et se termine par un message de "fin de séquence" envoyés par l'interrogateur.

De manière similaire au procédé selon le premier mode de réalisation, cette séquence de recherche comporte deux aspects: la scrutation (ou lecture) des codes présents et la validation des codes reçus.

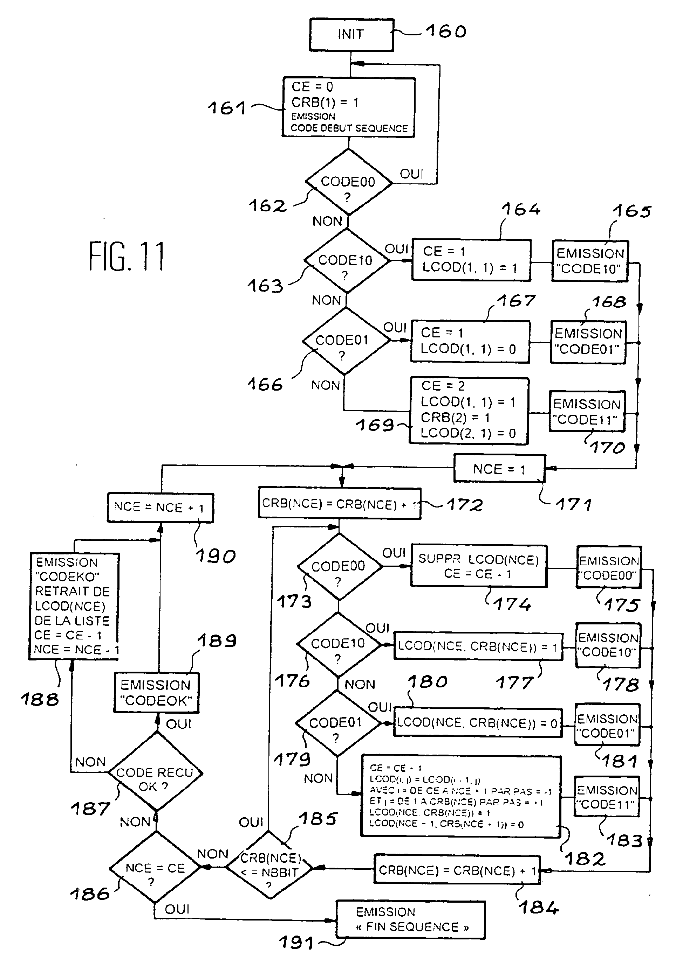

La figure 11 représente le diagramme fonctionnel des phases d'identification et de vérification des codes, pour le dispositif interrogateur, conformément au second mode de réalisation de l'invention, c'est-à-dire dans le cas d'une lecture en profondeur d'abord.

Ce procédé commence par une étape 160 d'initialisation du dispositif interrogateur. Il se poursuit par une étape 161 de mise à 0 du compteur d'étiquettes CE, de mise à 1 du compteur de rangs de bits CRB et d'envoi d'un message de début de séquence.

Un test 162 vérifie ensuite si un code00 a été reçu. Si c'est le cas, alors le procédé reprend au début de l'étape 161. Dans le cas contraire, le procédé passe au test 163 qui vérifie s'il s'agit d'un code10 : si oui, le compteur d'étiquettes CE est mis à 1 (bloc 164) et le bit 1 du premier code d'étiquette est mis à 1, LCOD (1, 1) = 1. Le procédé se poursuit alors par une étape 165 d'émission d'un "code10" puis par l'étape 171 de mise à 1 du numéro courant d'étiquette NCE.

Si au test 163, il ne s'agit pas d'un code10, alors le dispositif interrogateur vérifie, au cours d'un test 166, s'il s'agit d'un code01. Si c'est le cas, alors le compteur d'étiquette CE est mis à 1 et le bit 1 du premier code est mis à 0 (étape 167), puis il y a émission d'un code01 à l'étape 168 ; le procédé se poursuit ensuite à l'étape 171, déjà citée précédemment.

Si, au test 166, le code reçu n'est pas "code01", cela signifie qu'il y a au moins une étiquette avec un bit à 0 et au moins une avec un bit à 1 (code 11) ; la liste est alors initialisée avec une étiquette à 1 pour le premier bit et une étiquette à 0 pour le premier bit ; le compteur d'étiquettes CE est mis à 2 et le compteur de rang de bit CRB(2) de l'étiquette 2 est mis à 1. Le procédé se poursuit par l'émission d'un "code11" (étape 170) puis par l'étape 171 d'incrémentation du numéro courant d'étiquette NCE.

Une étape 172 consiste ensuite à incrémenter le compteur de rang de bits CRB (NCE) de l'étiquette n° NCE de 1.

Des tests 173, 176 et 179, respectivement identiques aux tests 162, 163, 166, consistent à vérifier s'il s'agit d'un code00, d'un code10 ou d'un code01. Si le test 173 est vérifié, une étape 174 consiste à supprimer de la liste LCOD, le code de l'étiquette n° NCE en cours et à décrémenter de 1 le compteur d'étiquettes CE. Un code 00 est ensuite émis (étape 175).

Si le test 173 n'est pas vérifié, un test 176 est mis en oeuvre. Si la réponse à ce dernier est positive, c'est-à-dire s'il y a au moins une étiquette avec le bit courant à 1 et aucune avec ce bit à "0", alors le bit courant CRB de l'étiquette NCE est mis à 1 dans la liste LCOD (bloc 177), puis un message "code10" est émis (bloc 178).

Si la réponse au test 176 est négative, le procédé se poursuit par un test 179 qui consiste à vérifier s'il y a au moins une étiquette avec le bit courant à "0" et aucune avec ce bit à "1" (c'est-à-dire "code01") ; si c'est le cas, le bit courant CRB de l'étiquette NCE est mis à "0" dans la liste des codes LCOD à l'étape 180, puis un "code01" est émis, en 181.

Si la réponse au test 179 est négative, c'est-à-dire s'il y a, à la fois, au moins une étiquette avec le bit courant CRB à "1" et au moins une étiquette avec ce bit courant à "0", alors le compteur d'étiquettes CE est incrémenté (bloc 182), le bit courant CRB de l'étiquette NCE est mis à 1 dans la liste LCOD, le bit courant CRB de l'étiquette NCE + 1 est mis à "0" dans la liste LCOD après duplication du début du code avec le code de l'étiquette précédente. Il y a ensuite émission d'un "code11" à l'étape 183.

Après chacune des étapes 175, 178, 181 et 183, le procédé se poursuit par une étape 184 d'incrémentation de 1 du compteur de rangs de bits CRB de l'étiquette NCE puis par un test 185 qui consiste à vérifier si le compteur de rang de bits CRB de l'étiquette NCE est inférieur au nombre de bits du code d'identification NBBIT. Si oui, le procédé reprend au début de l'étape 173. Si non, un test 186 consiste à vérifier si le numéro NCE de l'étiquette est égal au compteur d'étiquette CE.

Si ce test est vérifié, alors le procédé est terminé par l'émission d'un code fin séquence.

Si ce test n'est pas vérifié, alors un test 187 consiste à vérifier si le code reçu est "OK" (le code est OK, par exemple, lorsque son « check sum » est correct ou lorque ses bits de parité sont corrects). Si oui, il y a émission d'un "codeOK" (bloc 189). SI non, un "codeKO" est émis (bloc 188), l'étiquette NCE est retirée de la liste LCOD, le compteur d'étiquettes CE est décrémenté de 1 ainsi que le numéro d'étiquette NCE.

Le procédé se poursuit ensuite par l'incrémentation du NCE. Le procédé reprend ensuite à l'étape 172.

Sur la figure 9, on a représenté le diagramme fonctionnel de la phase d'identification, au niveau des étiquettes, selon le second mode de réalisation de l'invention (c'est-à-dire avec une recherche en profondeur d'abord).

La phase de lecture du code d'identification selon ce second mode de réalisation, commence par une étape d'initialisation 130 de l'étiquette, puis une mise à 0 de la bascule de première lecture BPL, du compteur de numéros d'ordre CNO, du registre de numéros d'ordre RNO, du décompteur de numéros d'ordre DNO et du compteur de rangs de bits CRB (étape 131).

Le procédé se poursuit par un test 132 qui consiste à vérifier s'il s'agit du début de la séquence et, si c'est le cas, à mettre à 1 le compteur de numéros d'ordre CNO, ainsi que le décompteur de numéros d'ordre DNO (étape 133). Le procédé se poursuit par une étape 147 qui sera décrite ultérieurement.

Si la réponse au test 132 est négative, alors un test 134 est effectué pour vérifier si le code reçu est le code00. Dans l'affirmative, le compteur de numéros d'ordre CNO et le décompteur de numéros d'ordre DNO sont décrémentés chacun de 1, à l'étape 135 ; puis le procédé se poursuit à l'étape 147. Dans la négative, un test 136 est effectué pour vérifier si le code reçu est le code10, ou le code01. Si c'est le cas, un test 137 vérifie si le décompteur de numéros d'ordre DNO est égal à 1 et, si oui, un nouveau test 138 est effectué pour vérifier si le compteur de rangs de bits CRB est inférieur à NBBIT. Si la réponse au test 137 ou au test 138 est négative, alors le procédé reprend au début du test 132. Si la réponse au test 138 est positive, alors le procédé se poursuit à l'étape 147.

Si au test 136, la réponse est non, alors un test 139 vérifie si le code reçu est le code11. Si c'est le cas, alors un test 140 vérifie, s'il y a eu précédemment l'émission d'un "1", ou si le décompteur de numéros d'ordre DNO est supérieur à 1. Dans l'affirmative, le compteur de numéros d'ordre CNO, et le décompteur de numéros d'ordre DNO sont incrémentés de 1 et le procédé reprend au début du test 137. Si la réponse au test 140 est non, alors le procédé reprend directement au test 137.

Si le résultat du test 139 est négatif, alors un test 142 vérifie s'il y a eu réception d'un message codeOK. Si ce n'est pas le cas, le procédé reprend au test 132. Dans le cas contraire, un test 143 est effectué pour vérifier si le décompteur de numéros d'ordre DNO est supérieur à 1 : si oui, DNO est décrémenté de 1 (étape 144) et le procédé se poursuit à l'étape 147 ; si non, la bascule de première lecture BPL est mise à 1 et le registre de numéros d'ordre RNO est mis à la valeur du compteur de numéros d'ordre CNO (étape 145), puis l'étiquette est inhibée (étape 146).

Après l'étape 144 de décrémentation de DNO, tout comme à la fin du test 138, de l'étape 135, et de l'étape 133, le procédé se poursuit par un test 147 qui consiste à vérifier si le décompteur de numéros d'ordre DNO est égal à 1. Si c'est le cas, alors le compteur de rangs de bits CRB est incrémenté de 1 (étape 148) et un test 149 vérifie si le code (pour le compteur de rangs de bits courant) est à 1. Dans l'affirmative, il y a émission d'un "1", à l'étape 151 puis retour au test 132. Dans la négative, il y a émission d'un "0", à l'étape 150, puis retour au début du test 132.

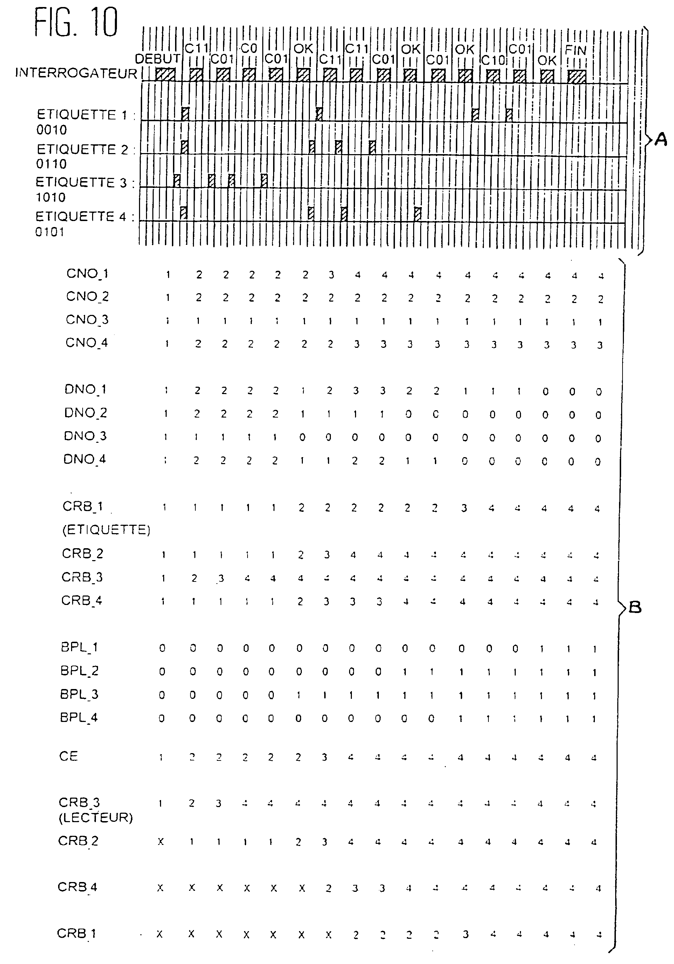

Sur la figure 10, on a représenté le chronogramme de la séquence de recherche pour l'exemple représenté sur la figure 1 et selon le second mode ce réalisation, c'est-à-dire avec une lecture en profondeur d'abord.

Sur la partie 1, on voit la réponse de chacune des étiquettes 1, 2, 3 et 4 au fur et à mesure de la phase de lecture. Ce procédé de lecture consistant à lire l'arbre binaire c'abord en profondeur, on voit que le bit de poids le plus fort de chaque étiquette est tout d'abord déterminé puis que chaque code est déterminé, l'un après l'autre. Sur cet exemple, c'est donc le code de l'étiquette 3 qui sera déterminé en premier, puis le code de l'étiquette 2, puis le code de l'étiquette 4 et enfin le code de l'étiquette 1.

Sur la partie B, on a représenté les valeurs pour les compteurs de numéros d'ordre CNO, les décompteurs de numéros d'ordre DNO de chaque étiquette E1, E2, E3 et E4, la valeur du compteur de rangs de bits CRB, ainsi que la valeur de la bascule de première lecture BPL. On a aussi noté la valeur du compteur d'étiquettes CE, ainsi que la valeur du compteur de rangs de bits CRB pour le dispositif interrogateur.

## Revendications

1. Procédé de lecture d'un ensemble d'étiquettes munies chacune d'un code d'identification binaire distinct et situées dans le champ électromagnétique d'un dispositif interrogateur, le procédé consistant en une identification des codes binaires des étiquettes au moyen d'émissions et de réceptions de signaux entre le dispositif interrogateur et les étiquettes, les codes étant tous de même taille N, l'identification de ces codes par le dispositif interrogateur étant effectuée successivement, bit par bit, en parcourant un arbre de recherche binaire ayant

$\sum_{i=1}^{n} 2^i$ branches représentant chacune la valeur 0 ou 1 d'un des N bits, chaque branche étant connectée à la branche de valeur complémentaire 1 ou 0 par l'intermédiaire d'un noeud et chaque branche de l'arbre de recherche n'étant lue qu'une seule fois au cours d'une séquence de lecture de l'ensemble des étiquettes, le dispositif interrogateur ne reparcourant pas les branches déjà identifiées, **caractérisé en ce que** chaque étiquette mémorise le dernier noeud de bifurcation parcouru pendant la séquence d'identification de son code.

2. Procédé de lecture selon la revendication 1, **caractérisé en ce que** le dispositif interrogateur mémorise chaque noeud situé à l'intersection de deux branches de l'arbre à parcourir et appelé noeud de bifurcation.

3. Procédé de lecture selon l'une des revendications 1 ou 2, **caractérisé en ce qu'**il consiste à parcourir l'arbre binaire en largeur d'abord.

4. Procédé de lecture selon l'une quelconque des revendications 1 à 3, **caractérisé en ce qu'**il consiste à parcourir l'arbre binaire en profondeur d'abord.

5. Système de lecture d'un ensemble dynamique d'étiquettes comportant un ensemble d'étiquettes et un dispositif interrogateur, lesdites étiquettes étant munies chacune d'un code d'identification binaire distinct et situées dans le champ électromagnétique du dispositif interrogateur, des codes binaires des étiquettes étant identifiés au moyen d'émissions et de réceptions de signaux entre le dispositif interrogateur et les étiquettes, les codes étant tous de même taille N, l'identification de ces codes par le dispositif interrogateur étant effectuée successivement, bit par bit, en parcourant un arbre de recherche binaire ayant $\sum_{i=1}^{n} 2^i$ branches représentant chacune la valeur 0 ou 1 d'un des N bits, chaque branche étant connectée à la branche de valeur complémentaire 1 ou 0 par l'intermédiaire d'un noeud et chaque branche de l'arbre de recherche n'étant lue qu'une seule fois au cours d'une séquence de lecture de l'ensemble des étiquettes, le dispositif interrogateur ne reparcourant pas les branches déjà identifiées, **caractérisé en ce que** chaque étiquette mémorise le dernier noeud de bifurcation parcouru pendant la séquence d'identification de son code.

6. Système selon la revendication 5, **caractérisé en ce que** lesdites étiquettes et ledit dispositif interrogateur comportent chacun des moyens émetteurs/récepteurs de signaux (1, 2, 14, 15, 16, 17) ainsi que des moyens électroniques de séquencement (5, 18) et des moyens de mémorisation (13, 22), et **en ce que** le dispositif interrogateur comporte :

   - un compteur d'étiquettes (19) pour compter le nombre d'étiquettes présentes dans le champ du dispositif interrogateur ;
   - un compteur de rang de bits (21) ;
   - un registre de mémorisation (22) de la liste des codes lus ou en cours de lecture ; et
   - un pointeur (23) pour pointer vers cette liste des codes,

   et **en ce que** chaque étiquette comporte :

   - un compteur de numéros d'ordre (10) ;
   - un décompteur de numéros d'ordre (12) ;
   - un registre de numéros d'ordre (11) ;
   - un compteur d'étiquettes (6) ;
   - un compteur de rangs de bits (8) ; et
   - une bascule de première lecture (9).

7. Système selon la revendication 6, **caractérisé en ce que** le dispositif interrogateur et les étiquettes comportent chacun un décompteur d'étiquettes (7, 20) pour déterminer le code en cours de lecture.

8. Système selon l'une des revendications 6 ou 7, **caractérisé en ce que** le compteur de chaque étiquette est apte à compter toutes les étiquettes présentes.

9. Système selon l'une quelconque des revendications 6 à 8, **caractérisé en ce qu'**au moins une étiquette comporte, en outre :

   - un registre de mémorisation de la liste des codes lus ou en cours de lecture ; et
   - un pointeur pour pointer vers cette liste des codes, de façon à permettre, à cette étiquette, d'identifier le code des autres étiquettes à partir d'émissions du dispositif interrogateur.

## Claims

1. Read method for a set of tags each with a distinct binary ID code and located in the electromagnetic field of a polling device, consisting of an identification of the binary tag codes by means of transmitting and receiving signals between the polling device and the tags, **characterized in that**, the codes all having the same size N, the identification of these codes is done successively, bit by bit, by scanning a binary search tree with $\sum_{i=1}^{N} 2^i$ branches, each branch representing the value 0 or 1 of one of the N bits, each branch being connected to the branch of the complementary value 1 or 0 via a node and **in that** each branch of the search tree is read only once during a tag set read sequence, the polling device not passing again through the already identified branches, **characterized in that** each tag stores the final branching node scanned during the identification sequence of its code.

2. Read method according to claim 1, **characterized in that** the polling device stores each node located at the intersection of two branches of the tree to be traversed and referred to as the branching node.

3. Read method according to claim 1 or 2, **characterized in that** it consists in scanning the binary tree widthwise first.

4. Read method according to any one of claims 1 to 3, **characterized in that** it consists in scanning the binary tree first.

5. Read system, for a dynamic set of tags comprising a set of tags and a polling device, said tags being in each case provided with a distinct binary identification code and located in the electromagnetic field of the polling device, binary codes of the tags being identified by means of transmissions and receptions of signals between the polling device and the tags, all the codes being of the same size N, the identification of said codes by the polling device being carried out successively, bit by bit, traversing a binary search tree having $\sum_{i=1}^{N} 2^i$ branches, each representing the value 0 or 1 of one of the N bits, each branch being connected to the branch of a complementary value 1 or 0 by a node and each branch of the search tree being read only once during a tag set read sequence, the polling device not again passing through, the already identified, branches, **characterized in that** each tag stores the last branching node scanned during the identification sequence of its code.

6. System for reading a dynamic set of tags through a polling device, the tags and the polling device each comprising signal transmitting/receiving means (1, 2, 14, 15, 16, 17) as well as electronic sequencing means (5, 18) and storage means (13, 22), **characterized in that** the polling device comprises:

- a tag counter (19) for counting the number of tags present in the field of the polling device;
- a bit position counter (21) ;
- a storage register (22) for the list of codes read or currently being read; and
- a pointer (23) for pointing to this code list, and **in that** each tag comprises:
- a Sequence number counter (10) ;
- a sequence number downcounter (12) ;
- a sequence number register (11) ;
- a tag counter (6);
- a bit position counter (8); and
- a first read latch (9).

7. System according to claim 6, **characterized in that** the polling device and the tags each comprise a tag downcounter (7, 20) for determining the code currently being read.

8. System according to claim 6 or 7, **characterized in that** the counter of each tag is capable of counting all tags present.

9. System according to any one of claims 6 to 8, **characterized in that** at least one tag further comprises:

- a storage register for the list of codes read or currently being read; and
- a pointer for pointing to this code list, so as to enable this tag to identify the code of the other tags through the transmissions of the polling device.

**Patentansprüche**

1. Verfahren zum Lesen einer Menge von Etiketten, von denen jede einen anderen binären Idenüfikationscode hat und die sich in dem elektromagnetischen Feld einer Abfragevorrichtung befinden, wobei das Verfahren eine Identifizierung der binären Codes der Etiketten mittels Sendens und Empfangens von Signalen zwischen der Abfragevorrichtung und den Etiketten umfasst, die Codes alle dieselbe Größe N haben und die Identifizierung dieser Codes durch die Abfragevorrichtung sukzessiv erfolgt, Bit für Bit, indem ein binärer Suchbaum mit $\sum_{i=1}^{n} 2^i$ Zweigen durchlaufen wird, von denen jeder den Wert 0 oder 1 von einem der N Bits repräsentiert, wobei jeder Zweig durch einen Knoten verbunden ist mit dem Zweig des komplementären Werts 1 oder 0, jeder Zweig im Laufe einer Lesesequenz aller Etiketten nur ein einziges Mal gelesen wird und die Abfragevorrichtung die schon identifizierten Zweige nicht nochmals durchläuft,
**dadurch gekennzeichnet, dass** jedes Etikett den letzten während der Identifikationssequenz ihres Codes durchlaufenen Verzweigungsknoten abspeichert.

**2.** Leseverfahren nach Anspruch 1, **dadurch gekennzeichnet, dass** die Abfragevorrichtung jeden Knoten abspeichert, der sich am Schnittpunkt zweier Zweige des zu durchlaufenden Baums befindet und Verzweigungspunkt genannt wird.

**3.** Leseverfahren nach einem der Ansprüche 1 oder 2, **dadurch gekennzeichnet, dass** es darin besteht, den Binärbaum zuerst in der Breite zu durchlaufen.

**4.** Leseverfahren nach einem der Ansprüche 1 bis 3, **dadurch gekennzeichnet, dass** es darin besteht, den Binärbaum zuerst in der Tiefe zu durchlaufen.

**5.** System zum Lesen einer dynamischen Menge von Etiketten, von denen jede einen anderen binären Identifikationscode hat und die sich in dem elektromagnetischen Feld einer Abfragevorrichtung befinden, wobei die binären Codes der Etiketten mittels Sendens und Empfangens von Signalen zwischen der Abfragevorrichtung und den Etiketten identifiziert werden, die Codes alle dieselbe Größe N haben und die Identifizierung dieser Codes durch die Abfragevorrichtung sukzessiv erfolgt, Bit für Bit, indem ein binärer Suchbaum mit $\sum_{i=1}^{n} 2^i$ Zweigen durchlaufen wird, von denen jeder den Wert 0 oder 1 von einem der N Bits repräsentiert, wobei jeder Zweig durch einen Knoten verbunden ist mit dem Zweig des komplementären Werts 1 oder 0, jeder Zweig im Laufe einer Lesesequenz aller Etiketten nur ein einziges Mal gelesen wird und die Abfragevorrichtung die schon identifizierten Zweige nicht nochmals durchläuft,
**dadurch gekennzeichnet, dass** jedes Etikett den letzten während der Identifikationssequenz ihres Codes durchlaufenen Verzweigungsknoten abspeichert.

**6.** System nach Anspruch 5, **dadurch gekennzeichnet, dass** die genannten Etiketten und die genannte Abfragevorrichtung jeweils Signalsende- und -empfangseinrichtungen (1, 2, 14, 15, 16, 17) sowie elektronische Sequenzierungseinrichtungen (5, 18) und Speichereinrichtungen (13, 22) umfassen, und dadurch, dass die Abfragevorrichtung umfasst:

- einen Etikettenzähler (19) zum Zählen der Anzahl der in dem Feld der Abfragevorrichtung präsenten Etiketten;
- einen Bitrang- bzw. Bitpositionszähler (21);
- ein Speicherregister (22) der Liste der schon gelesenen oder gerade gelesenen Etiketten, und
- einen Pointer (23), um auf diese Codeliste zu verweisen,

und dadurch, dass jedes Etikett umfasst:

- einen Ordnungsnummernzähler (10);
- einen Ordnungsnummern-Rückwärtszähler (12);
- ein Ordnungsnummernregister (11);
- einen Etikettenzähler (6);
- einen Bitrang- bzw. Bitpositionszähler (8); und
- eine Erstlektüre-Kippschaltung (9).

**7.** System nach Anspruch 6, **dadurch gekennzeichnet, dass** die Abfragevorrichtung und die Etiketten jeweils einen Etiketten-Rückwärtszähler (7, 20) umfassen, um den gerade gelesenen Code zu bestimmen.

**8.** System nach einem der Ansprüche 6 oder 7, **dadurch gekennzeichnet, dass** der Zähler jedes Etiketts fähig ist, alle präsenten Etiketten zu zählen.

**9.** System nach einem der Ansprüche 6 bis 8, **dadurch gekennzeichnet, dass** wenigstens ein Etikett außerdem umfasst:

- ein Speicherregister der schon gelesenen oder gerade gelesenen Codes; und
- einen Pointer, um auf diese Codeliste zu verweisen, um diesem Etikett zu ermöglichen, den Code der anderen Etiketten aufgrund von Aussendungen der Abfragevorrichtung zu identifizieren.

CRB 1
CRB 2
CRB 3
CRB 4
B3
B2
B1
B0
E1
E4
E2
E3

FIG. 1

T1
T2
T3
T4
CODE INTERROGATEUR
ETIQUETTE(S) AVEC BIT = 0
ETIQUETTE(S) AVEC BIT = 1
PERIODE DE BASE

FIG. 5

14
2
1
4
3
6
CE
INC
RAZ
7
DCE
STR
DEC
CRB
INC
RAZ
8
9
BPL
R
S
SEQUENCEUR
10
CNO
INC
RAZ
RNO
STR
RAZ
11
DNO
STR
DEC
12
5
13 a
13 b
13

FIG. 2

15
17
16
19
18
INC
RAZ
CE
SEQUENCEUR
20
STR
DEC
DCE
23
RAZ
INC
DEC
PCOD
INC
RAZ
CRB
21
LCOD
22

FIG. 3

INITIALISATION
A
P
TEST PRESENCE
NON
OUI
IDENTIFICATION AVEC AFFECTATION D'UN NUMERO D'ORDRE
B
C
VERIF. DES NUMEROS DE LA LISTE COURANTE
MISE A JOUR DES INFORMATIONS DANS LES ETIQUETTES
G
D
TEST PRESENCE
MISE A JOUR LISTE
NON
OUI
E
IDENTIFICATION AVEC AFFECTATION D'UN NUMERO D'ORDRE
LISTE VIDE
NON
F
OUI

FIG. 4

30
INIT
31
BPL = 0
CNO = 0 CE = 0
DNO = 0 DCE = 0
RNO = 0 CRB = 0
32
DEBUT SEQUENCE ?
OUI
NON
49
CNO = 1 CE = 1
DNO = 1 CRB = 1
33
CODE 00 ?
OUI
NON
34
CRB = NBBIT ?
OUI
NON
35
BPL = 1
RNO = CNO
36
FIN LECTURE CODE = INHIBITION
37
DNO > 1 ?
OUI
NON
38
CNO = CNO - 1
39
CODE 10 OU CODE 01 ?
OUI
NON
40
DNO > 0 ?
NON
OUI
41
DNO = DNO - 1
42
DCE = DCE - 1
43
DCE = 0 ?
NON
OUI
44
DCE = CE
CRB = CRB + 1
DNO = CNO
45
DNO = 1 ?
NON
OUI
48
EMISSION "O"
46
CODE (CRB) = 1 ?
NON
OUI
47
EMISSION "1"
50
CODE 11 ?
NON
OUI
51
EMISSION = 0 ?
NON
OUI
52
CNO = CNO + 1
53
CRB = 1 ?
NON
OUI
54
CE = 2
DCE = 2
CRB = 2
DNO = CNO
55
CE = CE + 1
DCE = DCE - 1

FIG. 6 A

36
FIN LECTURE CODE
60
DNO = RNO
61
LECTURE CODE OK ?
OUI
NON
62
DNO = 0 ?
OUI
NON
63
DNO = DNO - 1
64
DNO = 0 ?
NON
OUI
65
EMISSION "1"
BPL = 1
66
LECTURE CODE K0 ?
OUI
NON
67
DNO = 0 ?
OUI
NON
68
DNO = DNO - 1
69
DNO = 0 ?
70
EMISSION "0"
BPL = 0
71
FIN DE SEQUENCE ?
OUI
NON
72
FIN VERIFICATION CODE

FIG. 6B

FIG. 7A
80
INIT
81
CE = 0
CRB = 1
DEBUT SEQUENCE
82
CODE 00
?
OUI
NON
83
CODE 10
?
OUI
84
CE = 1
LCOD(1, CRB) = 1
85
EMISSION
"CODE10"
NON
86
CODE 01
?
OUI
87
CE = 1
LCOD(1, CRB) = 0
88
EMISSION
"CODE01"
NON
89
CE = 2
LCOD(1, CRB) = 1
LCOD(2, CRB) = 0
90
EMISSION
"CODE 11"
91
CRB = CRB + 1
NCE = 1
92
CODE 00
?
OUI
93
SUPPR LCOD(NCE)
CE = CE - 1
94
EMISSION
"CODE 00"
NON
95
CODE 10
?
OUI
96
LCOD(NCE, CRB) = 1
97
EMISSION
"CODE 10"
NON
98
CODE 01
?
OUI
99
LCOD(NCE, CRB) = 0
100
EMISSION
"CODE 01"
NON
101
LCOD(i, j) = LCOD(i - 1, j)
POUR i DE CE A NCE + 1 PAR PAS
DE -1 ET j DE 1 A CRB PAR PAS DE +1
CE = CE + 1
LCOD(NCE, CRB) = 1
NCE = NCE + 1
LCOD(NCE, CRB) = 0
102
EMISSION
"CODE 11"
105
NCE = NCE + 1
NON
103
NCE = CE
?
OUI
NON
104
CRB = NBBIT
?
OUI
106
FIN LECTURE CODE

EMISSION DEBUT
110
DEBUT VERIFICATION CODE
111
CODE 00
?
NON
112
FIN AVEC ERREUR
OUI
113
NCE = 1
114
LCOD(NCE)
OK
?
NON
117
EMISSION "KO"
SUPPR. LCOD(NCE)
CE = CE - 1
115
OUI
EMISSION "OK"
116
NON
CODE 10
?
OUI
118
NON
CODE 01
?
OUI
122
NCE = NCE + 1
119
NON
NCE = CE
?
OUI
120
EMISSION
"FIN SEQUENCE"
121
FIN DE SEQUENCE

FIG. 7B

INTERROGATEUR
DEBUT
C11
C01
C11
C10
C11
C10
C01
C01
C10
C01
C00
OK
KO
OK
OK
FIN
ETIQUETTE 1 : 0010
ETIQUETTE 2 : 0010
ETIQUETTE 3 : 1010
ETIQUETTE 4 : 0101
A
B

| | | | | | | | | | | | | | | | | | |
|---|---|---|---|---|---|---|---|---|---|---|---|---|---|---|---|---|---|
| CNO_1 | 1 | 2 | 2 | 3 | 3 | 4 | 4 | 4 | 4 | 4 | 4 | 4 | 4 | 4 | 4 | 4 | 4 |
| CNO_2 | 1 | 2 | 2 | 2 | 2 | 2 | 2 | 2 | 2 | 2 | 2 | 2 | 2 | 2 | 0 | 0 | 0 |
| CNO_3 | 1 | 1 | 1 | 1 | 1 | 1 | 1 | 1 | 1 | 1 | 1 | 1 | 1 | 1 | 1 | 1 | 1 |
| CNO_4 | 1 | 2 | 2 | 2 | 2 | 3 | 3 | 3 | 3 | 3 | 3 | 3 | 3 | 3 | 3 | 3 | 3 |
| DNO_1 | 1 | 2 | 1 | 3 | 2 | 1 | 4 | 3 | 2 | 1 | 0 | 4 | 3 | 2 | 1 | 0 | 0 |
| DNO_2 | 1 | 2 | 1 | 2 | 1 | 0 | 2 | 1 | 0 | 0 | 0 | 2 | 1 | 0 | 0 | 0 | 0 |
| DNO_3 | 1 | 1 | 0 | 1 | 0 | 0 | 1 | 0 | 0 | 0 | 0 | 1 | 0 | 0 | 0 | 0 | 0 |
| DNO_4 | 1 | 2 | 1 | 2 | 1 | 0 | 3 | 2 | 1 | 0 | 0 | 3 | 2 | 1 | 0 | 0 | 0 |
| CE | 0 | 2 | 2 | 3 | 3 | 4 | 4 | 4 | 4 | 4 | 4 | 4 | 4 | 4 | 3 | 3 | 3 |
| DCE | 0 | 2 | 1 | 3 | 2 | 1 | 4 | 3 | 2 | 1 | 4 | 4 | 3 | 2 | 1 | 0 | 0 |
| CRB | 0 | 1 | 1 | 2 | 2 | 2 | 3 | 3 | 3 | 3 | 4 | X | X | X | X | X | X |
| BPL_1 | 0 | 0 | 0 | 0 | 0 | 0 | 0 | 0 | 0 | 0 | 0 | 0 | 0 | 0 | 0 | 1 | 1 |
| BPL_2 | 0 | 0 | 0 | 0 | 0 | 0 | 0 | 0 | 0 | 0 | 0 | 0 | 0 | 0 | 0 | 0 | 0 |
| BPL_3 | 0 | 0 | 0 | 0 | 0 | 0 | 0 | 0 | 0 | 0 | 0 | 0 | 1 | 1 | 1 | 1 | 1 |
| BPL_4 | 0 | 0 | 0 | 0 | 0 | 0 | 0 | 0 | 0 | 0 | 0 | 0 | 0 | 0 | 1 | 1 | 1 |
| RNO_1 | 0 | 0 | 0 | 0 | 0 | 0 | 0 | 0 | 0 | 0 | 0 | 0 | 0 | 0 | 0 | 4 | 4 |
| RNO_2 | 0 | 0 | 0 | 0 | 0 | 0 | 0 | 0 | 0 | 0 | 0 | 0 | 0 | 0 | 0 | 0 | 0 |
| RNO_3 | 0 | 0 | 0 | 0 | 0 | 0 | 0 | 0 | 0 | 0 | 0 | 0 | 1 | 1 | 1 | 1 | 1 |
| RNO_4 | 0 | 0 | 0 | 0 | 0 | 0 | 0 | 0 | 0 | 0 | 0 | 0 | 0 | 0 | 3 | 3 | 3 |

FIG. 8

INIT
130
BPL = 0
CNO = 0 DNO = 0
RNO = 0 CRB = 0
131
132
DEBUT SEQUENCE ?
OUI
133
CNO = 1
DNO = 1
NON
134
CODE 00 ?
OUI
135
CNO = CNO - 1
DNO = DNO - 1
NON
136
CODE 10 OU CODE 01 ?
OUI
137
DNO = 1 ?
NON
OUI
CRB < NBBIT ?
NON
138
OUI
NON
139
CODE 11 ?
OUI
EMISSION = 1 OU DNO > 1 ?
OUI
140
CNO = CNO + 1
DNO = DNO + 1
141
NON
142
CODE OK ?
NON
OUI
DNO > 1 ?
OUI
143
144
DNO = DNO - 1
NON
BPL = 1
RNO = CNO
145
INHIBITION
146
147
DNO = 1 ?
NON
OUI
CRB = CRB + 1
148
150
EMISSION "0"
CODE(CRB) = 1 ?
NON
149
OUI
EMISSION "1"
151

FIG. 9

FIG. 10

DEBUT
C11
C01
C0
C01
OK
C11
C11
C01
OK
C01
OK
C10
C01
OK
FIN
INTERROGATEUR
ETIQUETTE 1 : 0010
ETIQUETTE 2 : 0110
ETIQUETTE 3 : 1010
ETIQUETTE 4 : 0101
A

| | | | | | | | | | | | | | | | | | |
|---|---|---|---|---|---|---|---|---|---|---|---|---|---|---|---|---|---|
| CNO_1 | 1 | 2 | 2 | 2 | 2 | 2 | 3 | 4 | 4 | 4 | 4 | 4 | 4 | 4 | 4 | 4 | 4 |
| CNO_2 | 1 | 2 | 2 | 2 | 2 | 2 | 2 | 2 | 2 | 2 | 2 | 2 | 2 | 2 | 2 | 2 | 2 |
| CNO_3 | 1 | 1 | 1 | 1 | 1 | 1 | 1 | 1 | 1 | 1 | 1 | 1 | 1 | 1 | 1 | 1 | 1 |
| CNO_4 | 1 | 2 | 2 | 2 | 2 | 2 | 2 | 3 | 3 | 3 | 3 | 3 | 3 | 3 | 3 | 3 | 3 |
| DNO_1 | 1 | 2 | 2 | 2 | 2 | 1 | 2 | 3 | 3 | 2 | 2 | 1 | 1 | 1 | 0 | 0 | 0 |
| DNO_2 | 1 | 2 | 2 | 2 | 2 | 1 | 1 | 1 | 1 | 0 | 0 | 0 | 0 | 0 | 0 | 0 | 0 |
| DNO_3 | 1 | 1 | 1 | 1 | 1 | 0 | 0 | 0 | 0 | 0 | 0 | 0 | 0 | 0 | 0 | 0 | 0 |
| DNO_4 | 1 | 2 | 2 | 2 | 2 | 1 | 1 | 2 | 2 | 1 | 1 | 0 | 0 | 0 | 0 | 0 | 0 |
| CRB_1 (ETIQUETTE) | 1 | 1 | 1 | 1 | 1 | 2 | 2 | 2 | 2 | 2 | 2 | 3 | 4 | 4 | 4 | 4 | 4 |
| CRB_2 | 1 | 1 | 1 | 1 | 1 | 2 | 3 | 4 | 4 | 4 | 4 | 4 | 4 | 4 | 4 | 4 | 4 |
| CRB_3 | 1 | 2 | 3 | 4 | 4 | 4 | 4 | 4 | 4 | 4 | 4 | 4 | 4 | 4 | 4 | 4 | 4 |
| CRB_4 | 1 | 1 | 1 | 1 | 1 | 2 | 3 | 3 | 3 | 4 | 4 | 4 | 4 | 4 | 4 | 4 | 4 |
| BPL_1 | 0 | 0 | 0 | 0 | 0 | 0 | 0 | 0 | 0 | 0 | 0 | 0 | 0 | 0 | 1 | 1 | 1 |
| BPL_2 | 0 | 0 | 0 | 0 | 0 | 0 | 0 | 0 | 0 | 1 | 1 | 1 | 1 | 1 | 1 | 1 | 1 |
| BPL_3 | 0 | 0 | 0 | 0 | 0 | 1 | 1 | 1 | 1 | 1 | 1 | 1 | 1 | 1 | 1 | 1 | 1 |
| BPL_4 | 0 | 0 | 0 | 0 | 0 | 0 | 0 | 0 | 0 | 0 | 0 | 1 | 1 | 1 | 1 | 1 | 1 |
| CE | 1 | 2 | 2 | 2 | 2 | 2 | 3 | 4 | 4 | 4 | 4 | 4 | 4 | 4 | 4 | 4 | 4 |
| CRB_3 (LECTEUR) | 1 | 2 | 3 | 4 | 4 | 4 | 4 | 4 | 4 | 4 | 4 | 4 | 4 | 4 | 4 | 4 | 4 |
| CRB_2 | X | 1 | 1 | 1 | 1 | 2 | 3 | 4 | 4 | 4 | 4 | 4 | 4 | 4 | 4 | 4 | 4 |
| CRB_4 | X | X | X | X | X | X | 2 | 3 | 3 | 4 | 4 | 4 | 4 | 4 | 4 | 4 | 4 |
| CRB_1 | X | X | X | X | X | X | X | 2 | 2 | 2 | 2 | 3 | 4 | 4 | 4 | 4 | 4 |

B

FIG. 11
INIT
160
CE = 0
CRB(1) = 1
EMISSION
CODE DEBUT SEQUENCE
161
CODE00
?
OUI
162
NON
CODE10
?
OUI
163
CE = 1
LCOD(1, 1) = 1
164
EMISSION
"CODE10"
165
NON
CODE01
?
OUI
166
CE = 1
LCOD(1, 1) = 0
167
EMISSION
"CODE01"
168
NON
CE = 2
LCOD(1, 1) = 1
CRB(2) = 1
LCOD(2, 1) = 0
169
EMISSION
"CODE11"
170
NCE = 1
171
CRB(NCE) = CRB(NCE) + 1
172
NCE = NCE + 1
190
EMISSION
"CODEKO"
RETRAIT DE
LCOD(NCE)
DE LA LISTE
CE = CE - 1
NCE = NCE - 1
188
CODE00
?
OUI
173
SUPPR LCOD(NCE)
CE = CE - 1
174
EMISSION
"CODE00"
175
CODE10
?
OUI
176
LCOD(NCE, CRB(NCE)) = 1
177
EMISSION
"CODE10"
178
NON
CODE01
?
OUI
179
LCOD(NCE, CRB(NCE)) = 0
180
EMISSION
"CODE01"
181
NON
CE = CE - 1
LCOD(i, j) = LCOD(i - 1, j)
AVEC i = DE CE A NCE + 1 PAR PAS = -1
ET j = DE 1 A CRB(NCE) PAR PAS = +1
LCOD(NCE, CRB(NCE)) = 1
LCOD(NCE - 1, CRB(NCE - 1)) = 0
182
EMISSION
"CODE11"
183
EMISSION
"CODEOK"
189
OUI
NON
CODE RECU
OK ?
187
NON
OUI
CRB(NCE)
< = NBBIT
?
185
NON
NCE = CE
?
186
CRB(NCE) = CRB(NCE) + 1
184
OUI
EMISSION
« FIN SEQUENCE »
191